# EUROPEAN PATENT APPLICATION

(11) **EP 4 398 608 A1**
(43) Date of publication of application: **10.07.2024**
(21) Application number: 22874491.8
(22) Date of filing: 22.08.2022
(51) Int. Cl.: H04W 4/02

(54) **DEVICE SEARCH METHOD, ELECTRONIC DEVICE, AND SYSTEM**

(30) Priority: 30.09.2021 CN 202111163826
(71) Applicant: Petal Cloud Technology Co., Ltd., Dongguan, Guangdong 523799 (CN)
(72) Inventor: LI, Gaofeng, Dongguan, Guangdong 523799 (CN); LIU, Zheng, Dongguan, Guangdong 523799 (CN); HAN, Chuang, Dongguan, Guangdong 523799 (CN); ZOU, Yue, Dongguan, Guangdong 523799 (CN)
(74) Representative: Goddar, Heinz J.
(86) International application number: PCT/CN2022/114042
(87) International publication number: WO 2023/051098

(57) **Abstract**

Embodiments of this application disclose a device search method and system, and an electronic device. The method includes: A first application of a second electronic device obtains at least one piece of location information. After the first application obtains the at least one piece of location information, the second electronic device scans a first Bluetooth broadcast sent by a first electronic device. The second electronic device obtains first location information based on the first Bluetooth broadcast, where the first location information is at least one of the at least one piece of location information. The second electronic device reports the first location information to a server. It can be learned that the second electronic device may use location information obtained by another application on the second electronic device. When the second electronic device obtains the Bluetooth broadcast through scanning, the second electronic device does not need to frequently invoke a second application to obtain location information. In this way, power consumption can be effectively reduced, and an effect of reporting the location information a plurality of times can be implemented, so that efficiency of searching for a lost device is high.

## Description

This application claims priority to Chinese Patent Application No. 202111163826.6, filed with the China National Intellectual Property Administration on September 30, 2021 and entitled "DEVICE SEARCH METHOD AND SYSTEM, AND ELECTRONIC DEVICE", which is incorporated herein by reference in its entirety.

### TECHNICAL FIELD

This application relates to the field of electronic device technologies, and in particular, to a device search method and system, and an electronic device.

### BACKGROUND

With rapid development of electronic devices, the electronic devices may perform location positioning in a preset positioning manner. The preset positioning manner may include global positioning system (global positioning system, GPS) positioning, base station positioning, wireless fidelity access point (Wi-Fi AP) positioning, BeiDou satellite positioning, and the like. The GPS positioning is used as an example. When an electronic device is lost and enters an offline state, the electronic device sends a Bluetooth broadcast to a surrounding online device. After receiving the Bluetooth broadcast, the surrounding online device obtains location information through positioning by using a GPS signal, and reports the location information to a server. A search device may determine an approximate range of the electronic device based on the location information of the online device, so that a user can find the electronic device more quickly and accurately.

However, if the online device receives a plurality of Bluetooth broadcasts, a location reporting service needs to be frequently enabled, and this increases power consumption of the online device. In this way, in a search process of the electronic device, efficiency of searching for the lost device is low, and a good search effect cannot be achieved.

### SUMMARY

Embodiments of this application provide a device search method and system, and an electronic device, to effectively reduce power consumption, and implement an effect of reporting location information for a plurality of times, so that efficiency of searching for a lost device is high.

To achieve the foregoing objectives, the following technical solutions are used in embodiments of this application.

According to a first aspect, an embodiment of this application provides a device search method. The method includes: A first application of a second electronic device obtains at least one piece of location information. After the first application obtains the at least one piece of location information, a first electronic device sends a first Bluetooth broadcast to the second electronic device, where the first electronic device is in an offline state. The second electronic device scans the first Bluetooth broadcast sent by the first electronic device. The second electronic device obtains first location information based on the first Bluetooth broadcast, where the first location information is at least one of the at least one piece of location information. The second electronic device reports the first location information to a server.

In this case, the first application of the second electronic device obtains at least one piece of location information. After the first application obtains the at least one piece of location information, the second electronic device scans a first Bluetooth broadcast sent by the first electronic device. The second electronic device obtains first location information based on the first Bluetooth broadcast, where the first location information is at least one of the at least one piece of location information. The second electronic device reports the first location information to a server. It can be learned that the second electronic device may use location information obtained by another application on the second electronic device, instead, when the second electronic device obtains the Bluetooth broadcast through scanning, the second electronic device does not need to frequently invoke location information obtained by using a second application. In this way, power consumption can be effectively reduced, and an effect of reporting the location information for a plurality of times can be implemented, so that efficiency of searching for a lost device is high.

In a specific implementation, that the second electronic device reports the first location information to a server is specifically: The second electronic device reports the first location information and device information of the first electronic device to the server. The device information of the first electronic device indicates the server to match the location information of the second electronic device with an account of the first electronic device based on the device information of the first electronic device.

In some implementations, after the second electronic device reports the first location information to a server, further including: A third electronic device sends a query request to the server, where the query request is used to request to query a location of the first electronic device. The server obtains the first location information based on the query request. The server sends the first location information to the third electronic device. The third electronic device displays a first interface, where the first interface includes a first location corresponding to the first location information.

In a specific implementation, that the second electronic device obtains first location information based on the first Bluetooth broadcast is specifically: The second electronic device obtains, based on the Bluetooth broadcast, broadcast time and time at which the at least one piece of location information is obtained. The second electronic device obtains the first location information based on the broadcast time and the time at which the at least one piece of location information is obtained.

In a specific implementation, that the second electronic device obtains the first location information based on the broadcast time and the time at which the at least one piece of location information is obtained is specifically: The second electronic device determines that a time difference between the time at which the at least one piece of location information is obtained and the broadcast time is less than a first threshold. The second electronic device uses at least one piece of corresponding location information that is less than the first threshold as the first location information.

In a specific implementation, that the second electronic device obtains the first location information based on the broadcast time and the time at which the at least one piece of location information is obtained is specifically: The second electronic device determines that a time difference between the time at which the at least one piece of location information is obtained and the broadcast time is the smallest. The second electronic device uses at least one piece of location information corresponding to the smallest time difference as the first location information.

In a specific implementation, that the second electronic device determines that a time difference between the time at which the at least one piece of location information is obtained and the broadcast time is the smallest is specifically: The second electronic device determines that the time difference between the time at which the at least one piece of location information is obtained and the broadcast time is the smallest and the time difference is less than a second threshold.

In some implementations, the method further includes: A time difference between broadcast time of a second Bluetooth broadcast that is obtained by the second electronic device through scanning and the time at which the at least one piece of location information is obtained is greater than a third threshold, and the second electronic device invokes a second application to obtain location information.

In a specific implementation, the second application is any application that can obtain the location information and that is in the second electronic device.

In a specific implementation, that the second electronic device reports the first location information to a server is specifically: When the second electronic device detects that a third application reports data to the server, the second electronic device reports the first location information to the server. In other words, when the second electronic device detects that one of the plurality of applications on the second electronic device reports the location information to the server, the second electronic device reports the first location information to the server. In this way, the second electronic device does not need to deliberately start the network to report the location information, to reduce power consumption of waking up the AP and starting the network.

In a specific implementation, that the second electronic device reports the first location information to a server is specifically: When the second electronic device is connected to a network, the second electronic device reports the first location information to the server, where the second electronic device enables a network connection by using a fourth application. In other words, when the second electronic device detects that the second electronic device enables network connection by using the fourth application, the second electronic device reports the first location information to the server. In this way, the second electronic device does not need to deliberately start the network to report the location information, to reduce power consumption of waking up the AP and starting the network.

In a specific implementation, that the second electronic device reports the first location information to a server is specifically: The second electronic device simultaneously reports a plurality of pieces of first location information to the server. It should be understood that, when the second electronic device receives the broadcast sent by the first electronic device, regardless of whether the second electronic device determines one or more pieces of location information, the second electronic device may report location information of a period of time to the server in batches.

In this embodiment of this application, compared with that the second electronic device reports the location information to the server once when determining a piece of location information, the second electronic device reports the location information to the server in batches, to reduce power consumption more effectively.

In some implementations, before the first application of the second electronic device obtains the at least one piece of location information, the method further includes: The second electronic device receives an operation performed by a user on the first application, where the first application presets that a location function can be obtained when the application is started. The second electronic device starts the first application in response to the operation performed by the user on the first application.

In some implementations, there is at least one second electronic device.

In some implementations, the method further includes: The first electronic device and the third electronic device are paired in advance to generate a pair of a public key and a private key that are on an elliptic curve. The first electronic device holds the public key, and the third electronic device holds the private key and the public key.

In some implementations, the method further includes: The first electronic device generates a pair of a public key and a private key that are on an elliptic curve. The first electronic device synchronizes the public key and the private key to the third electronic device in a trust environment, where the third electronic device and the first electronic device use the same account.

According to a second aspect, an embodiment of this application provides a device search method. The method may be performed by an electronic device, or may be performed by a component (for example, a chip, a chip system, or a processor) in an electronic device. An example in which the method is performed by an electronic device is used below for description. The method includes: A first application of a second electronic device obtains at least one piece of location information. After the first application obtains the at least one piece of location information, the second electronic device scans a first Bluetooth broadcast sent by a first electronic device, where the first electronic device is in an offline state. The second electronic device obtains first location information based on the first Bluetooth broadcast, where the first location information is at least one of the at least one piece of location information. The second electronic device reports the first location information to a server.

In this way, the first application of the second electronic device obtains at least one piece of location information. After the first application obtains the at least one piece of location information, the second electronic device scans a first Bluetooth broadcast sent by the first electronic device. The second electronic device obtains first location information based on the first Bluetooth broadcast, where the first location information is at least one of the at least one piece of location information. The second electronic device reports the first location information to a server. It can be learned that the second electronic device may use location information obtained by another application on the second electronic device, instead, when the second electronic device obtains the Bluetooth broadcast through scanning, the second electronic device does not need to frequently invoke location information obtained by using a second application. In this way, power consumption can be effectively reduced, and an effect of reporting the location information for a plurality of times can be implemented, so that efficiency of searching for a lost device is high.

In a specific implementation, that the second electronic device reports the first location information to a server is specifically: The second electronic device reports the first location information and device information of the first electronic device to the server. The device information of the first electronic device indicates the server to match location information of the second electronic device with an account of the first electronic device based on the device information of the first electronic device.

In a specific implementation, that the second electronic device obtains first location information based on the first Bluetooth broadcast is specifically: The second electronic device obtains, based on the Bluetooth broadcast, broadcast time and time at which the at least one piece of location information is obtained. The second electronic device obtains the first location information based on the broadcast time and the time at which the at least one piece of location information is obtained.

In a specific implementation, that the second electronic device obtains the first location information based on the broadcast time and the time at which the at least one piece of location information is obtained is specifically: The second electronic device determines that a time difference between the time at which the at least one piece of location information is obtained and the broadcast time is less than a first threshold. The second electronic device uses at least one piece of corresponding location information that is less than the first threshold as the first location information.

In a specific implementation, that the second electronic device obtains the first location information based on the broadcast time and the time at which the at least one piece of location information is obtained is specifically: The second electronic device determines that a time difference between the time at which the at least one piece of location information is obtained and the broadcast time is the smallest. The second electronic device uses at least one piece of location information corresponding to the smallest time difference as the first location information.

In a specific implementation, that the second electronic device determines that a time difference between the time at which the at least one piece of location information is obtained and the broadcast time is the smallest is specifically: The second electronic device determines that the time difference between the time at which the at least one piece of location information is obtained and the broadcast time is the smallest and the time difference is less than a second threshold.

In some implementations, the method further includes: A time difference between broadcast time of a second Bluetooth broadcast that is obtained by the second electronic device through scanning and the time at which the at least one piece of location information is obtained is greater than a third threshold, and the second electronic device invokes a second application to obtain the location information.

In a specific implementation, the second application is any application that can obtain the location information and that is in the second electronic device.

In a specific implementation, that the second electronic device reports the first location information to a server is specifically: When the second electronic device detects that a third application reports data to the server, the second electronic device reports the first location information to the server. In other words, when the second electronic device detects that one of the plurality of applications on the second electronic device reports the location information to the server, the second electronic device reports the first location information to the server. In this way, the second electronic device does not need to deliberately start the network to report the location information, to reduce power consumption of waking up the AP and starting the network.

In a specific implementation, that the second electronic device reports the first location information to a server is specifically: When the second electronic device is connected to a network, the second electronic device reports the first location information to the server, where the second electronic device enables a network connection by using a fourth application. In other words, when the second electronic device detects that the second electronic device enables network connection by using the fourth application, the second electronic device reports the first location information to the server. In this way, the second electronic device does not need to deliberately start the network to report the location information, to reduce power consumption of waking up the AP and starting the network.

In a specific implementation, that the second electronic device reports the first location information to a server is specifically: The second electronic device simultaneously reports a plurality of pieces of first location information to the server. It should be understood that, when the second electronic device receives the broadcast sent by the first electronic device, regardless of whether the second electronic device determines one or more pieces of location information, the second electronic device may report location information of a period of time to the server in batches.

In this embodiment of this application, compared with that the second electronic device reports the location information to the server once when determining a piece of location information, the second electronic device reports the location information to the server in batches, to reduce power consumption more effectively.

In some implementations, before the first application of the second electronic device obtains the at least one piece of location information, the method further includes: The second electronic device receives an operation performed by a user on the first application, where the first application presets that a location function can be obtained when the application is started. The second electronic device starts the first application in response to the operation performed by the user on the first application.

In some implementations, there is at least one second electronic device.

According to a third aspect, an embodiment of this application provides a device search system. The system may include: A first application of a second electronic device obtains at least one piece of location information. A first electronic device is configured to: after the first application obtains the at least one piece of location information, send a first Bluetooth broadcast to the second electronic device, where the first electronic device is in an offline state. The second electronic device is configured to scan the first Bluetooth broadcast sent by the first electronic device. The second electronic device is configured to obtain first location information based on the first Bluetooth broadcast, where the first location information is at least one of the at least one piece of location information. The second electronic device is configured to report the first location information to a server.

In this way, the first application of the second electronic device obtains at least one piece of location information. After the first application obtains the at least one piece of location information, the second electronic device scans a first Bluetooth broadcast sent by the first electronic device. The second electronic device obtains first location information based on the first Bluetooth broadcast, where the first location information is at least one of the at least one piece of location information. The second electronic device reports the first location information to a server. It can be learned that the second electronic device may use location information obtained by another application on the second electronic device, instead, when the second electronic device obtains the Bluetooth broadcast through scanning, the second electronic device does not need to frequently invoke location information obtained by using a second application. In this way, power consumption can be effectively reduced, and an effect of reporting the location information for a plurality of times can be implemented, so that efficiency of searching for a lost device is high.

In a specific implementation, the second electronic device is further configured to report the first location information and the device information of the first electronic device to the server. The device information of the first electronic device indicates the server to match the location information of the second electronic device with an account of the first electronic device based on the device information of the first electronic device.

In some implementations, the system further includes a third electronic device, configured to send a query request to the server, where the query request is used to request to query a location of the first electronic device. The server is configured to obtain the first location information based on the query request.

The server is further configured to send the first location information to the third electronic device. The third electronic device is further configured to display a first interface, where the first interface includes a first location corresponding to the first location information.

In a specific implementation, the second electronic device is further configured to obtain broadcast time and time at which the at least one piece of location information is obtained based on the first Bluetooth broadcast; and obtain the first location information based on the broadcast time and the time at which the at least one piece of location information is obtained.

In a specific implementation, the second electronic device is further configured to: determine that a time difference between the time at which the at least one piece of location information is obtained and the broadcast time is less than a first threshold; and use at least one piece of location information that is less than the first threshold as the first location information.

In a specific implementation, the second electronic device is further configured to: determine that the time difference between the time at which the at least one piece of location information is obtained and the broadcast time is the smallest; and use at least one piece of location information corresponding to the smallest time difference as the first location information.

In a specific implementation, the second electronic device is further configured to: determine that the time difference between the time at which the at least one piece of location information is obtained and the broadcast time is the smallest and the time difference is less than a second threshold.

In a specific implementation, the second electronic device is further configured to: when a time difference between the broadcast time of the second Bluetooth broadcast that is obtained by the second electronic device through scanning and the time at which the at least one piece of location information is obtained is greater than a third threshold, invoke the second application to obtain the location information.

In a specific implementation, the second application is any application that can obtain the location information and that is in the second electronic device.

In a specific implementation, the second electronic device is further configured to: The second electronic device reports the first location information to the server when the second electronic device detects that a third application reports data to the server.

In other words, when the second electronic device detects that one application (for example, the third application) in the plurality of applications on the second electronic device reports the location information to the server, the second electronic device reports the first location information to the server. In this way, the second electronic device does not need to deliberately start the network to report the location information, to reduce power consumption of waking up the AP and starting the network.

In a specific implementation, the second electronic device is further configured to: when the second electronic device connects to a network, report the first location information to the server, where the second electronic device enables a network connection by using a fourth application.

In this way, when the second electronic device detects that the second electronic device enables network connection by using the fourth application, the second electronic device reports the first location information to the server. In this way, the second electronic device does not need to deliberately start the network to report the location information, to reduce power consumption of waking up the AP and starting the network.

In a specific implementation, the second electronic device is further configured to simultaneously report a plurality of pieces of first location information to the server. It should be understood that, when the second electronic device receives the broadcast sent by the first electronic device, regardless of whether the second electronic device determines one or more pieces of location information, the second electronic device may report location information of a period of time to the server in batches.

In this embodiment of this application, compared with that the second electronic device reports the location information to the server once when determining a piece of location information, the second electronic device reports the location information to the server in batches, to reduce power consumption more effectively.

In a specific implementation, the second electronic device is further configured to receive an operation performed by the user on the first application, where the first application presets that a location function can be obtained when the application is started; and start the first application in response to the operation performed by the user on the first application.

In some implementations, there is at least one second electronic device.

In a specific implementation, the first electronic device is further configured to: pre-pair with the third electronic device, to generate a pair of a public key and a private key that are on an elliptic curve. The first electronic device holds the public key, and the third electronic device holds the private key and the public key.

In a specific implementation, the first electronic device is further configured to generate a pair of a public key and a private key that are on an elliptic curve, and synchronize the public key and the private key to the third electronic device in a trust environment, where the third electronic device and the first electronic device use a same account.

According to a fourth aspect, an embodiment of this application provides an electronic device. The electronic device is used as a first electronic device and includes a touchscreen, a memory, a transceiver, one or more processors, a plurality of applications, and one or more programs. The one or more programs are stored in the memory, and the transceiver is configured to transmit or receive a wireless signal. When the one or more processors execute the one or more programs, the electronic device is enabled to implement the method according to the first aspect, or the electronic device is enabled to implement the method according to the second aspect.

According to a fifth aspect, an embodiment of this application provides a computer-readable storage medium. The computer-readable storage medium stores a computer program, the computer program includes a program instruction, and when the program instruction is executed by a computer, the computer is enabled to perform the method according to the first aspect, or the method according to the second aspect.

According to a sixth aspect, an embodiment of this application provides a computer program product. When the computer program product runs on a computer, the computer is enabled to perform the method according to the first aspect or the method according to the second aspect.

For specific implementations and corresponding technical effects of the embodiments in the second aspect to the sixth aspect, refer to the specific implementations and technical effects of the first aspect.

In this embodiment of this application, a first application of the second electronic device obtains at least one piece of location information. After the first application obtains the at least one piece of location information, the second electronic device scans a first Bluetooth broadcast sent by the first electronic device. The second electronic device obtains first location information based on the first Bluetooth broadcast, where the first location information is at least one of the at least one piece of location information. The second electronic device reports the first location information to a server. It can be learned that the second electronic device may use location information obtained by another application on the second electronic device, instead, when the second electronic device obtains the Bluetooth broadcast through scanning, the second electronic device does not need to frequently invoke location information obtained by using a second application. In this way, power consumption can be effectively reduced, and an effect of reporting the location information for a plurality of times can be implemented, so that efficiency of searching for a lost device is high.

### BRIEF DESCRIPTION OF DRAWINGS

To describe technical solutions in embodiments of this application more clearly, the following briefly describes accompanying drawings for describing embodiments.
FIG. 1 is a schematic scenario diagram of a device search system according to an embodiment of this application;
FIG. 2 is a schematic diagram of a structure of an electronic device according to an embodiment of this application;
FIG. 3 is a diagram of a software architecture of a device search system according to an embodiment of this application;
FIG. 4a-1 and FIG. 4a-2 are a schematic flowchart of a device search method according to an embodiment of this application;

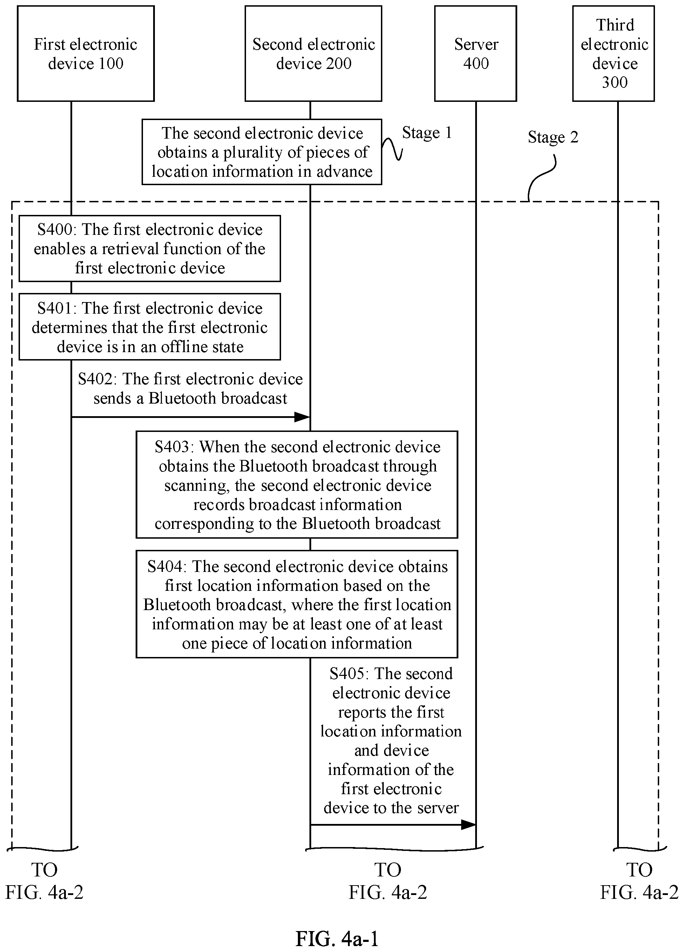

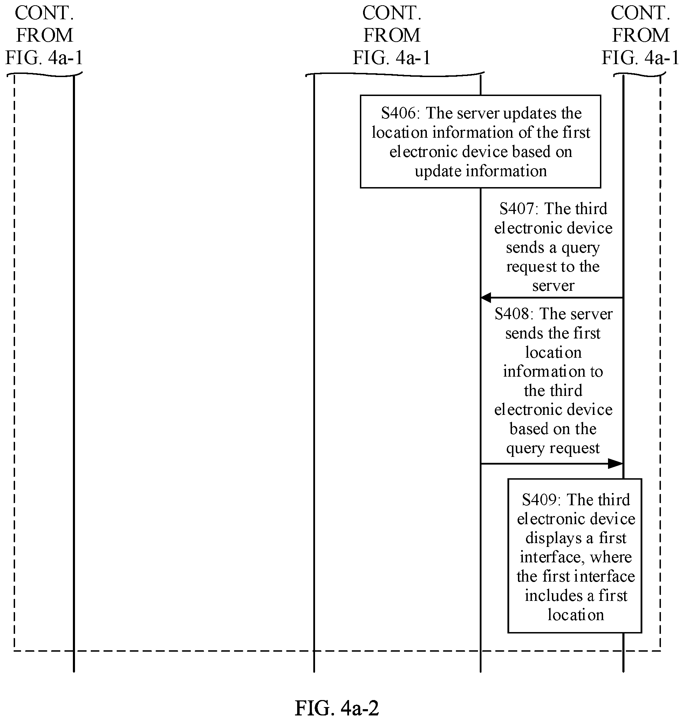

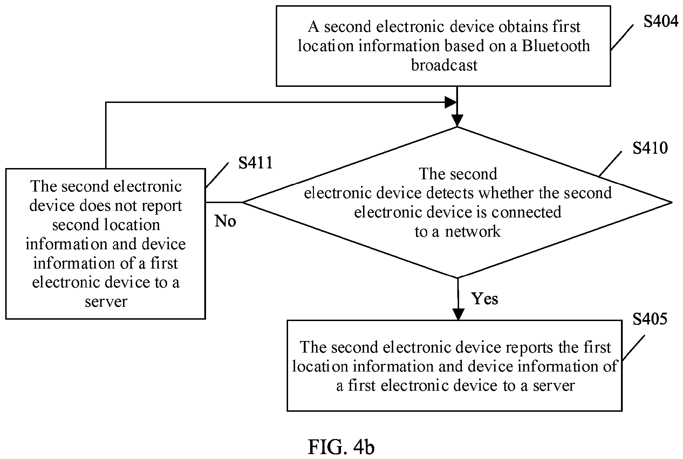

FIG. 4b is a schematic flowchart of a device search method according to an embodiment of this application;

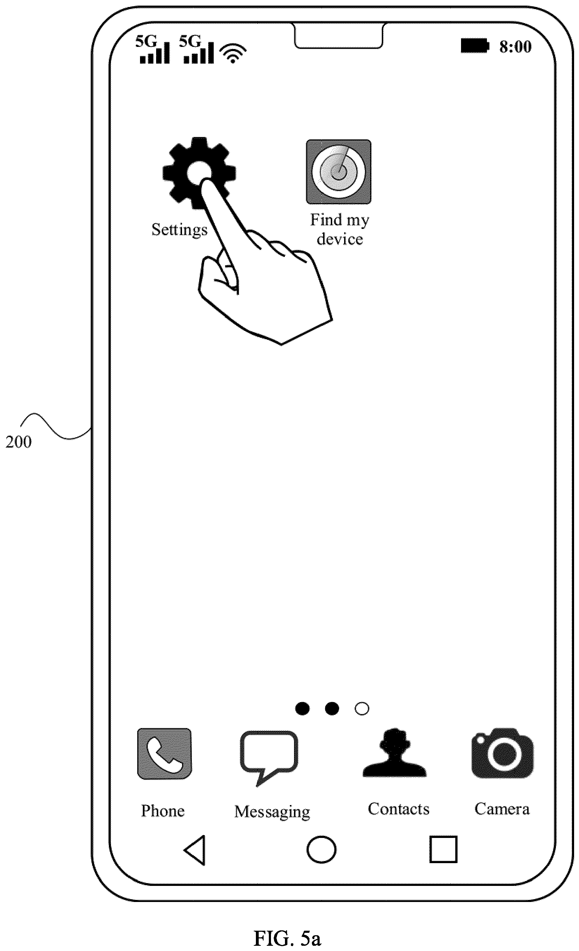

FIG. 5a is a schematic diagram of an interface of a second electronic device according to an embodiment of this application;

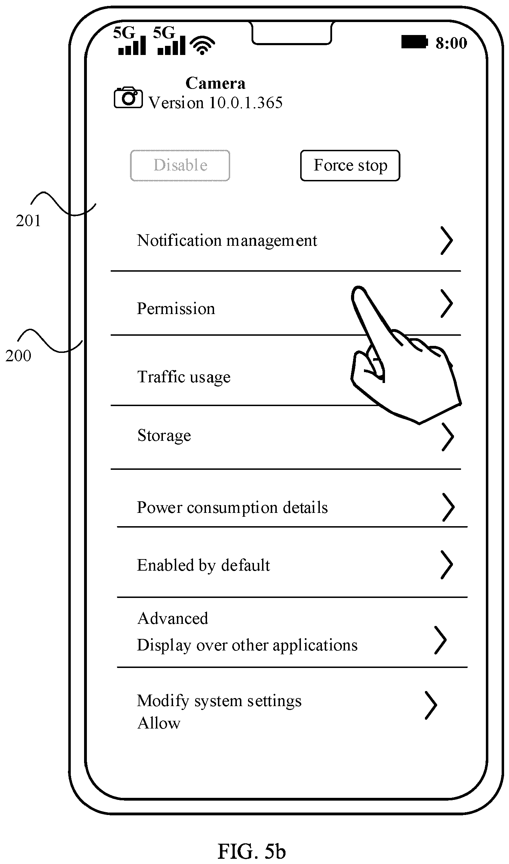

FIG. 5b is another schematic diagram of an interface of a second electronic device according to an embodiment of this application;

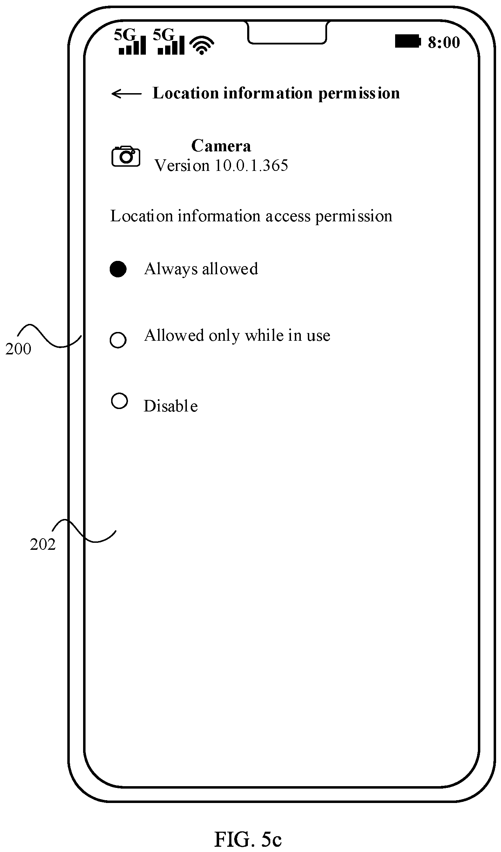

FIG. 5c is another schematic diagram of an interface of a second electronic device according to an embodiment of this application;

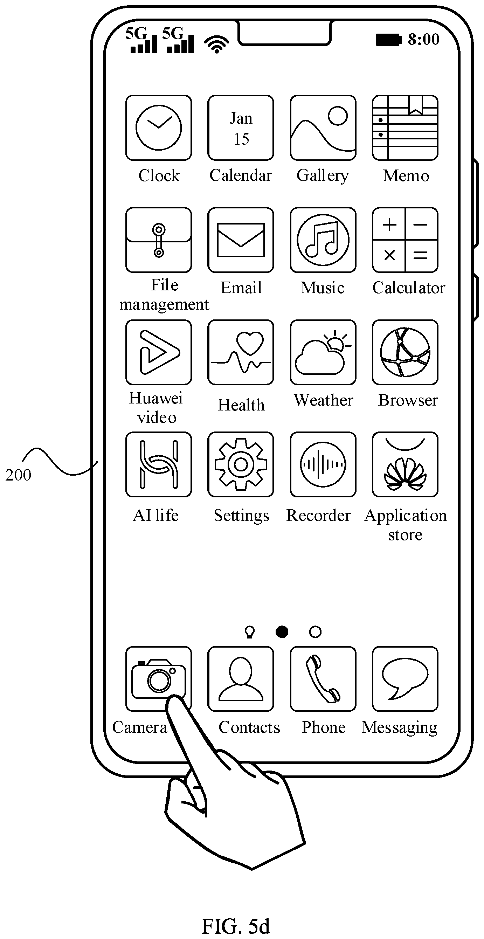

FIG. 5d is another schematic diagram of an interface of a second electronic device according to an embodiment of this application;

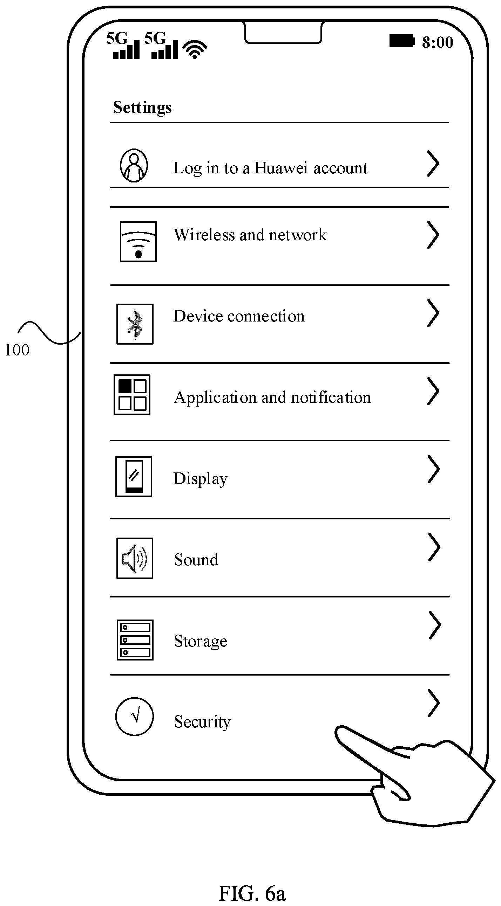

FIG. 6a is a schematic diagram of an interface of a first electronic device according to an embodiment of this application;

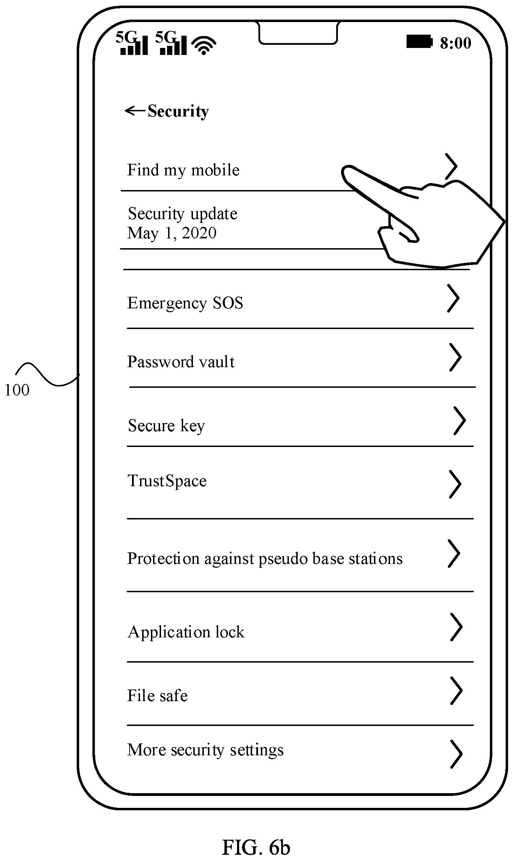

FIG. 6b is another schematic diagram of an interface of a first electronic device according to an embodiment of this application;

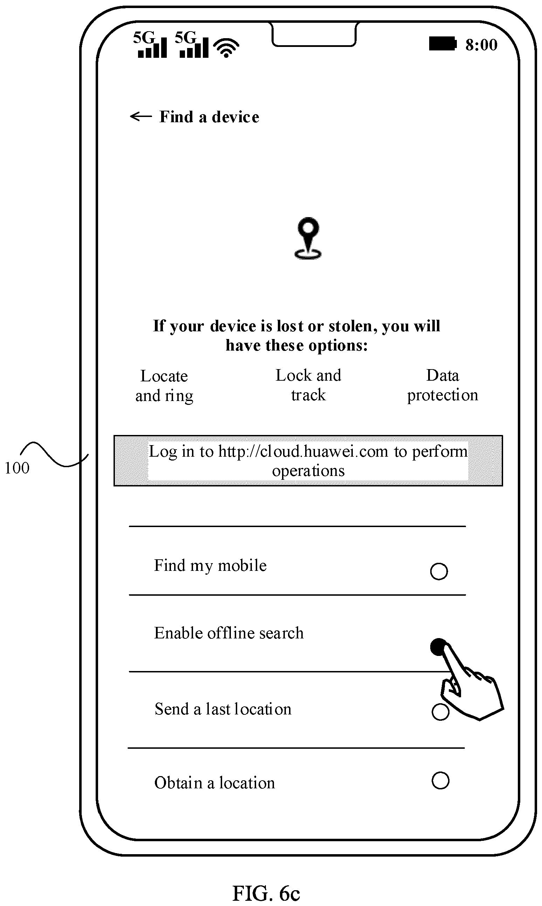

FIG. 6c is another schematic diagram of an interface of a first electronic device according to an embodiment of this application;

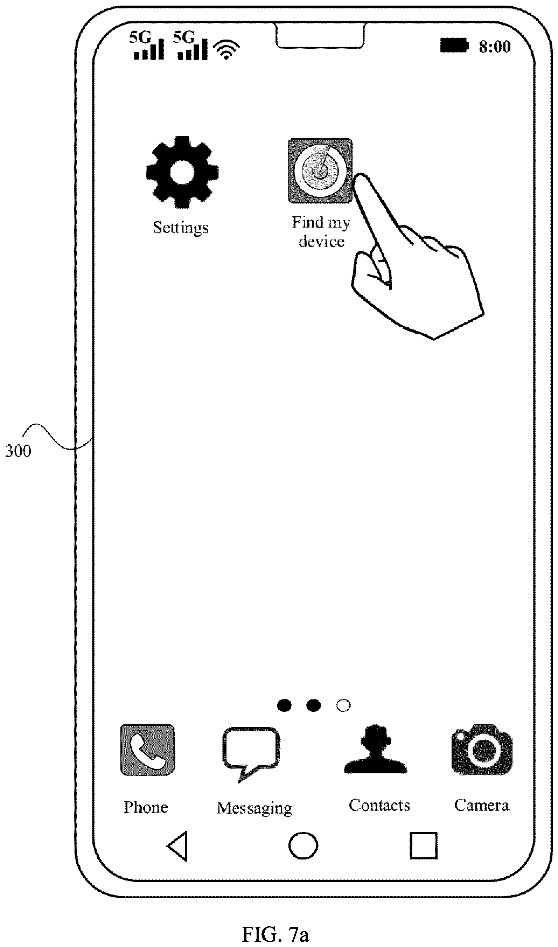

FIG. 7a is a schematic diagram of an interface of a third electronic device according to an embodiment of this application;

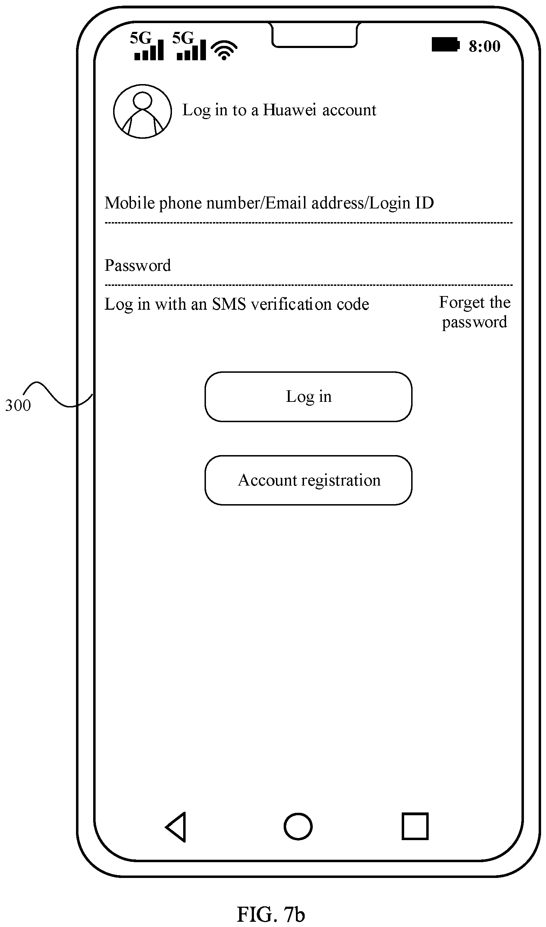

FIG. 7b is another schematic diagram of an interface of a third electronic device according to an embodiment of this application;

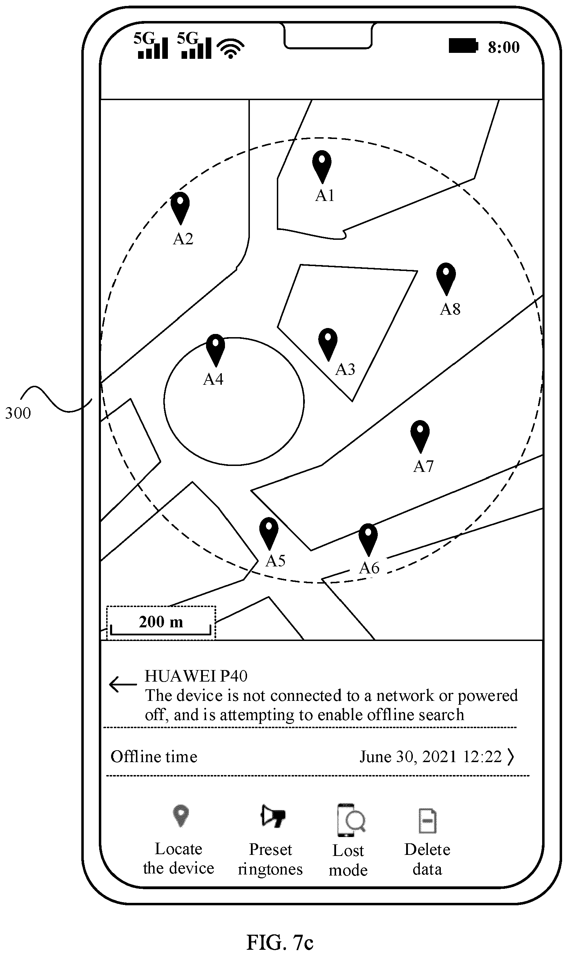

FIG. 7c is another schematic diagram of an interface of a third electronic device according to an embodiment of this application;

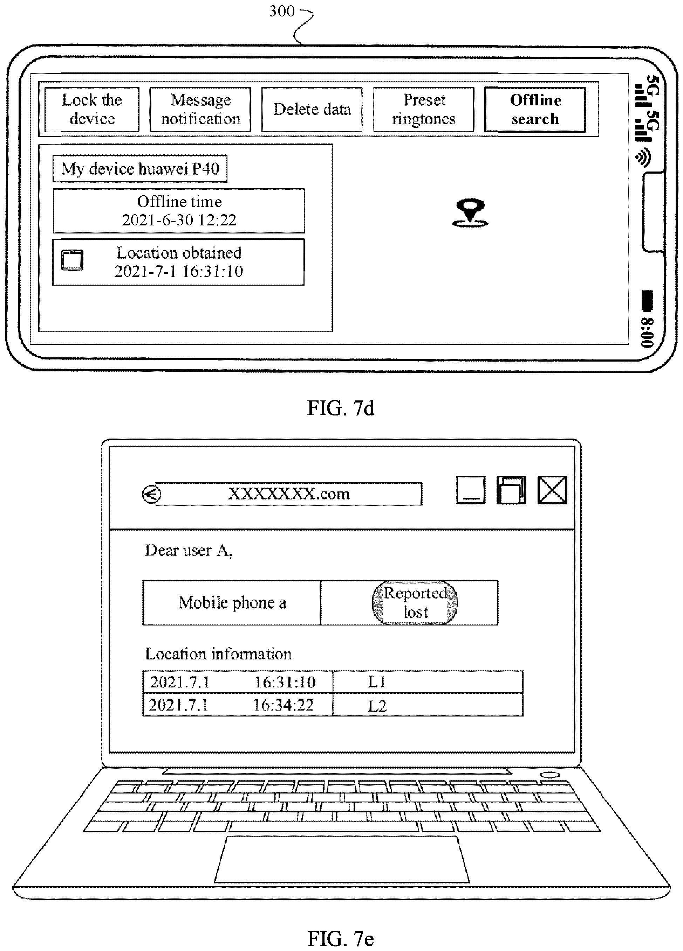

FIG. 7d is another schematic diagram of an interface of a third electronic device according to an embodiment of this application;
FIG. 7e is another schematic diagram of an interface of a third electronic device according to an embodiment of this application;

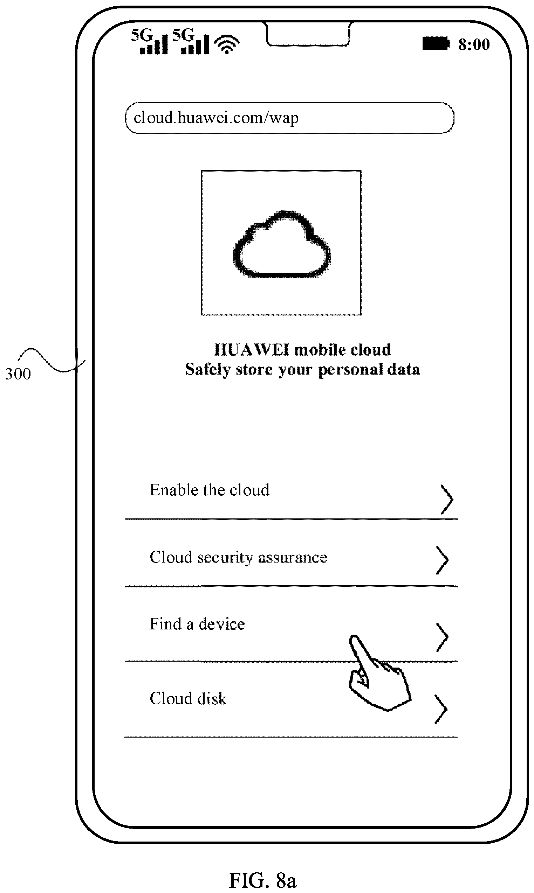

FIG. 8a is still another schematic diagram of an interface of a third electronic device according to an embodiment of this application; and

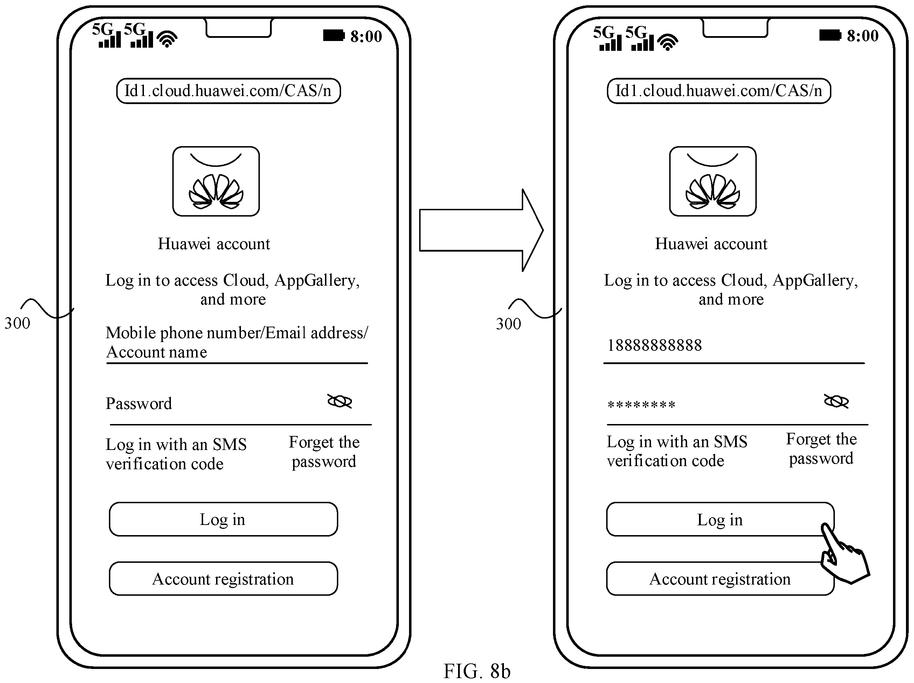

FIG. 8b is still another schematic diagram of an interface of a third electronic device according to an embodiment of this application.

### DESCRIPTION OF EMBODIMENTS

The following clearly and completely describes the technical solutions in embodiments of this application with reference to the accompanying drawings in embodiments of this application.

To make a person skilled in the art understand the technical solutions in the present invention better, the following clearly and completely describes the technical solutions in embodiments of the present invention with reference to the accompanying drawings in embodiments of the present invention. It is clear that the described embodiments are merely some rather than all of embodiments of the present invention. All other embodiments obtained by a person of ordinary skill in the art based on embodiments of the present invention without creative efforts shall fall within the protection scope of the present invention.

The terms "include", "contain" and any other variants in the specification, claims, and the accompanying drawings of the present invention mean to cover the non-exclusive inclusion, for example, a process, method, system, product, or device that includes a list of steps or units is not necessarily limited to those units, but may include other units not expressly listed or inherent to such a process, method, system, product, or device.

In an existing device search method, it is assumed that a first electronic device is a lost device, and a second electronic device is an online device around the lost device. Each time the second electronic device receives a Bluetooth broadcast sent by the first device, the second electronic device performs GPS positioning and network positioning, wakes up a wireless access point (access point, AP), uploads data, starts an application, and the like. For example, 0.278 mAH is required for one time of GPS positioning, 0.4 mAH to 0.7 mAH is required for one time of network positioning, that is, (0.4 + 0.7)/2 = 0.55 mAH is required for one time of network positioning, 0.05 mAH is required for waking up the AP at one time, 0.02 mAH is required for one data upload, and 0.09 mAH is required for starting an application at one time. It is assumed that one time of network positioning is required for every two times of positioning. In this case, power consumption that needs to be consumed each time the second electronic device locates and reports location information is 0.278 + 0.55/2 + 0.05 + 0.02 + 0.09 = 0.713 mAH. In addition, because the power consumption of the second electronic device is limited, it is assumed that power consumption of the second electronic device for assisting in reporting positioning information every day needs to be less than 3 mAH. Therefore, a quantity of times that the second electronic device can report the positioning information in one day is only 0.713 mAH/3 mAH = 4. In this way, in a search process of the first electronic device, the limited quantity of times of reporting the positioning information results in low efficiency of searching for the lost device, and a good search effect cannot be achieved.

To resolve the foregoing technical problem, in embodiments of this application, a first application of the second electronic device obtains at least one piece of location information. After the first application obtains the at least one piece of location information, the second electronic device scans a first Bluetooth broadcast sent by the first electronic device. The second electronic device obtains first location information based on the first Bluetooth broadcast, where the first location information is at least one of the at least one piece of location information. The second electronic device reports the first location information to a server. It can be learned that the second electronic device may use location information obtained by another application on the second electronic device. When the second electronic device obtains the Bluetooth broadcast through scanning, the second electronic device does not need to frequently invoke a second application to obtain location information. In this way, power consumption can be effectively reduced, and an effect of reporting the location information for a plurality of times can be implemented, so that efficiency of searching for the lost device is high.

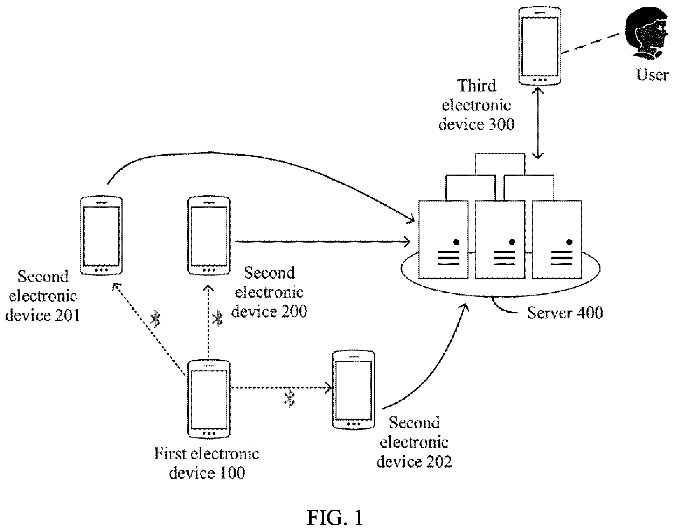

To facilitate understanding of the present invention, the following first describes a scenario application of the device search method according to the present invention. As shown in FIG. 1, FIG. 1 is a schematic diagram of a structure of a device search system according to the present invention.

Refer to FIG. 1. The device search system includes at least two electronic devices. The electronic devices may be electronic devices that support Bluetooth. Two electronic devices are used as an example. The two electronic devices may be a first electronic device 100 and a second electronic device 200. The first electronic device 100 and the second electronic device 200 each may include a Bluetooth module. The Bluetooth module may be integrated on the electronic device (that is, all-in-one), or may be pluggable on the electronic device. The first electronic device 100 and the second electronic device 200 may be connected to each other through Bluetooth. That the two devices are connected to each other through Bluetooth means that a Bluetooth link is established between the two devices. Through the Bluetooth link, the two devices may send signals to each other and receive signals sent by each other. The signal is referred to as a Bluetooth signal.

The first electronic device may be a lost device, and there may be at least one first electronic device. The first electronic device has a networking capability, and the networking capability refers to connecting to the Internet through Wi-Fi or a cellular network. In this embodiment of this application, a state of the first electronic device is that when a user disables a networking function (disables Wi-Fi and the cellular network), the first electronic device is in a network disconnected state, and the second electronic device cannot communicate with the server. Therefore, when the first electronic device is in the network disconnected state, the first electronic device cannot report location information of the first electronic device to the server through a positioning module of the first electronic device.

The second electronic device may be any device around the lost device, and there may be at least one second electronic device, for example, a second electronic device 201, a second electronic device 202, and the second electronic device 200. The second electronic device has an assisted positioning capability. When a user of the second electronic device enables an assisted positioning function, the second electronic device has a capability of obtaining current location information of the electronic device, where the location information may be, for example, longitude and latitude information. The positioning process may be implemented by using fused positioning such as GPS positioning, base station positioning, wireless fidelity access point (Wi-Fi AP) positioning, and BeiDou satellite positioning. The second electronic device has a networking capability, and the networking capability refers to connecting to the Internet through Wi-Fi or a cellular network. When the user of the second electronic device enables a networking function (enables Wi-Fi or the cellular network), the second electronic device is in a networking state, and the second electronic device can communicate with the server.

The second electronic device may be used as a device that assists in reporting locations, and report location information of the second electronic device to the server, to help the lost device locate an approximate range of the lost device, so as to quickly find the lost device. Specifically, when the first electronic device is in the network disconnected state, the first electronic device may send a Bluetooth broadcast to the second electronic device through a Bluetooth connection, where content of the Bluetooth broadcast may include a public key Pi derived from a public key P held by the first device. After receiving the Bluetooth broadcast sent by the first electronic device, the second electronic device obtains the public key Pi in the content of the Bluetooth broadcast, and encrypts positioning information of the second electronic device by using an elliptic curve integrated encrypt scheme (elliptic curve integrated encrypt scheme, ECIES) algorithm. The second electronic device uploads a ciphertext of the positioning information to a server 400. The server 400 may store related information and status information of electronic devices, and may provide information management and device retrieval services for the electronic devices.

The first electronic device 100 may register an account on the server 400, and the registered account is a sequence uniquely bound to an international mobile equipment identity (International Mobile Equipment Identity, IMEI) or a mobile equipment identifier (Mobile Equipment Identifier, MEID) of the first electronic device. In this way, the first electronic device is bound to the registered account. The user may also set a password for using the registered account, to become an authorized user of the registered account, so that the user logs in to the server by using the registered account. The registered account of the first electronic device may be a terminal device system account. In some other embodiments, the registered account of the first electronic device may be obtained by downloading a corresponding application and registering a corresponding account in the application. Therefore, the second electronic device and the first electronic device may be terminal devices produced by different terminal vendors. An application that can interact with the server is installed in the second electronic device and the first electronic device to implement the implementation solutions in this application.

Optionally, the first electronic device 100 may be an electronic device that supports Bluetooth, like a locator, a tracker, a mobile phone, a wearable device like a smartwatch, a tablet computer, or a personal digital assistant (personal digital assistant, PDA). Optionally, the first electronic device 100 and the second electronic device 200 each may be an electronic device that supports Bluetooth, like a mobile phone, a wearable device like a smartwatch, a tablet computer, or a PDA. Optionally, the first electronic device 100 and the second electronic device 200 may be a same type of electronic device. For example, both the first electronic device 100 and the second electronic device 200 are mobile phones. Alternatively, the first electronic device 100 and the second electronic device 200 may be different types of electronic devices. For example, the first electronic device 100 is a mobile phone, and the second electronic device 200 is a smartwatch. Alternatively, the first electronic device 100 is a locator/tracker, and the second electronic device 200 may be a mobile phone.

In some feasible implementations, the provided device search system further includes a third electronic device 300. The user may log in to the registered account of the first electronic device 100 on the third electronic device 300, and interact with the server 400 by using the registered account of the first electronic device 100. The third electronic device 300 may be a computer, a mobile phone, a wearable device like a smartwatch, a tablet computer, or the like. When the third electronic device is a computer, the user may log in to the user account by logging in to a service website (for example, a portal system Portal) of the server. When the third electronic device is mobile equipment like a mobile phone, the user may log in to the user account by logging in to an application (for example, Find my device). After logging in to the account of the first electronic device on the third electronic device, the user may remotely control the first electronic device to perform a corresponding function. For example, the user may tap "Locate the device" to obtain a current location of the first electronic device. Alternatively, the user may tap "Preset ringtones" to ring the first electronic device. Alternatively, the user may tap "Lost module" to set a mode of the first electronic device to be a lost mode. Alternatively, the user may tap "Delete data" to delete related data of the first electronic device.

In a specific implementation, the first electronic device and the third electronic device are paired in advance to generate a pair of a public key P and a private key d that are on an elliptic curve. The first electronic device holds the public key P, and the third electronic device holds the private key d and the public key P. In specific application, the implementation may be applied to a scenario in which the first electronic device is a locator or a tracker.

In another specific implementation, the first electronic device generates a pair of a public key P and a private key d that are on an elliptic curve. The first electronic device synchronizes the public key P and the private key d to the third electronic device in a trust environment, where the third electronic device and the first electronic device use a same account. In specific application, the implementation may be applied to a scenario in which the first electronic device is a mobile phone.

For ease of understanding, the following uses an example to describe a structure of the electronic device provided in this embodiment of this application.

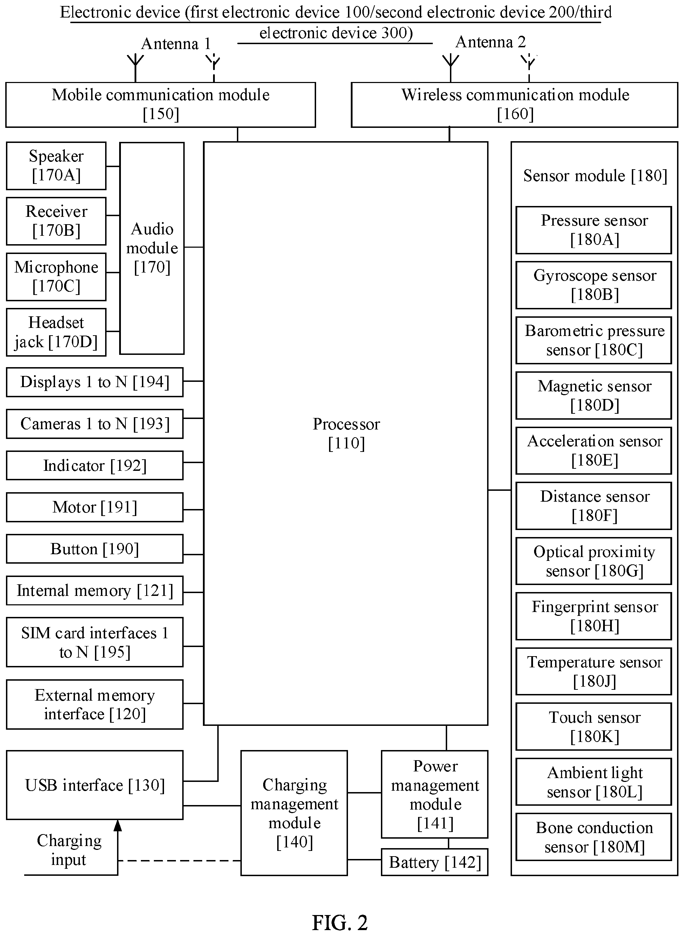

Refer to FIG. 2. FIG. 2 is a schematic diagram of a structure of an electronic device according to an embodiment of this application. The electronic device shown in FIG. 2 (one or more of the first electronic device 100, the second electronic device 200, and the third electronic device 300 shown in FIG. 1) may be a mobile phone, a tablet computer, or a PAD.

As shown in FIG. 2, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device. In some other feasible implementations of this application, the electronic device may include more or fewer components than those shown in the figure, or combine some components, or split some components, or have different component arrangements. This may be specifically determined based on an actual application scenario, and is not limited herein. The illustrated components shown in FIG. 2 may be implemented in hardware, software, or a combination of software and hardware.

Optionally, the processor 110 may include one or more processing units. For example, the processor 110 may include an application processor (application processor, AP), a modem processor, a graphics processing unit (graphics processing unit, GPU), and an image signal processor (image signal processor, ISP), a controller, a memory, a video codec, a digital signal processor (digital signal processor, DSP), a baseband processor, and/or a neural-network processing unit (neural-network processing unit, NPU), or the like. Different processing units may be independent components, or may be integrated into one or more processors.

The controller may be a nerve center and a command center of the electronic device. The controller may generate an operation control signal based on an instruction operation code and a time sequence signal, to complete control of instruction reading and instruction execution.

A memory may be further disposed in the processor 110, and is configured to store instructions and data. In some feasible implementations, the memory in the processor 110 is a cache memory. The memory may store an instruction or data that is used or cyclically used by the processor 110. If the processor 110 needs to use the instruction or the data again, the processor may directly invoke the instruction or the data from the memory. This avoids repeated access, reduces waiting time of the processor 110, and improves system efficiency.

In some feasible implementations, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of this application is merely an example for description, and does not constitute a limitation on the structure of the electronic device. In some other feasible implementations of this application, the electronic device may alternatively use different interface connection manners or a combination of a plurality of interface connection manners in the foregoing embodiment.

The charging management module 140 is configured to receive charging input from the charger, and charge the power management module 141 of the electronic device. The charger may be a wireless charger, or may be a wired charger.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like.

A wireless communication function of the electronic device may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Optionally, the antenna 1 and the antenna 2 may be configured to transmit a Bluetooth signal. Each antenna in the electronic device may be configured to cover one or more communication frequency bands. Different antennas may be further multiplexed to improve antenna utilization. For example, the antenna 1 may be multiplexed as a diversity antenna of a wireless local area network. In some other feasible implementations, the antenna may be used in combination with a tuning switch.

The mobile communication module 150 may provide a wireless communication solution that is applied to the electronic device and includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some feasible implementations, at least some functional modules in the mobile communication module 150 may be disposed in the processor 110. In some feasible implementations, at least some functional modules in the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate the received electromagnetic wave signal into the low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal through an audio device (which is not limited to the speaker 170A, the receiver 170B, or the like), or displays an image or a video through the display 194. In some feasible implementations, the modem processor may be an independent component. In some other feasible implementations, the modem processor may be independent of the processor 110, and is disposed in a same component as the mobile communication module 150 or another function module.

The wireless communication module 160 may provide a solution to wireless communication applied to the electronic device, for example, a wireless local area network (wireless local area network, WLAN), for example, a Wi-Fi network, Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some feasible implementations, the antenna 1 of the electronic device is coupled to the mobile communication module 150, and the antenna 2 is coupled to the wireless communication module 160, so that the electronic device can communicate with a network and another device (for example, the second electronic device 200) by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, the WLAN, the NFC, the FM, the IR technology, and/or the like. The foregoing GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device may implement a display function through the GPU, the display 194, the application processor, and the like. The GPU is a microprocessor for image processing, and is connected to the display 194 and the application processor. The GPU is used to perform mathematical and geometric calculations, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some feasible implementations, the electronic device may include one or N displays 194, where N is a positive integer greater than 1.

In some feasible implementations, the display 194 may be configured to display each interface output by a system of the electronic device. For each interface output by the electronic device, refer to related descriptions in subsequent embodiments.

The electronic device may implement an image shooting function by using the ISP, the camera 193, the video codec, the GPU, the display 194, the application processor, and the like.

The external memory interface 120 may be configured to connect to an external memory card, for example, a Micro SD card, to expand a storage capability of the electronic device. The external memory card communicates with the processor 110 through the external memory interface 120, to implement a data storage function. For example, files such as music and videos can be stored in the external memory card.

The internal memory 121 may be configured to store computer-executable program code. The executable program code includes instructions. The processor 110 executes various function applications of the electronic device and data processing by running the instructions stored in the internal memory 121. The internal memory 121 may include a program storage area and a data storage area. The program storage area may store an operating system, an application (like a device management function and a sound playing function) required by at least one function, and the like. The data storage area may store data (like a device parameter or a phone book) created in a process of using the electronic device. In addition, the internal memory 121 may include a high-speed random access memory, or may include a nonvolatile memory, for example, at least one magnetic disk storage device, a flash memory, or a universal flash storage (universal flash storage, UFS).

The electronic device may implement an audio function, for example, music playing and recording, through the audio module 170, the speaker 170A, the receiver 170B, the microphone 170C, the headset jack 170D, the application processor, for example, music playing, recording, and the like.

The audio module 170 is configured to convert digital audio information into an analog audio signal for output, and is also configured to convert analog audio input into a digital audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "microphone", is configured to convert a sound signal into an electrical signal.

The headset jack 170D is used to connect a wired headset. The headset jack 170D may be a USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some feasible implementations, the pressure sensor 180A may be disposed on the display 194. The gyroscope sensor 180B may be configured to determine a motion posture of the electronic device. The barometric pressure sensor 180C is configured to measure barometric pressure.

The acceleration sensor 180E may detect accelerations in various directions (usually on three axes) of the electronic device 100.

The distance sensor 180F is configured to measure a distance.

The ambient light sensor 180L is configured to sense ambient light brightness.

The fingerprint sensor 180H is configured to collect a fingerprint.

The temperature sensor 180J is configured to detect temperature.

The touch sensor 180K is also referred to as a touch panel. The touch sensor 180K may be disposed on the display 194, and the touch sensor 180K and the display 194 form a touchscreen, which is also referred to as a "touch control screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other feasible implementations, the touch sensor 180K may alternatively be disposed on a surface of the electronic device at a location different from that of the display 194.

The button 190 includes a power button, a volume button, and the like. The button 190 may be a mechanical button or a touch button.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195, or removed from the SIM card interface 195, to implement contact and separation from the electronic device. In some feasible implementations, the electronic device uses an eSIM, namely, an embedded SIM card. The eSIM card may be embedded in the electronic device, and cannot be separated from the electronic device.

A software system of the electronic device may use a layered architecture, an event-driven architecture, a micro kernel architecture, a microservice architecture, or a cloud architecture. In this embodiment of this application, an Android system with a layered architecture is used as an example to describe a software structure of an electronic device.

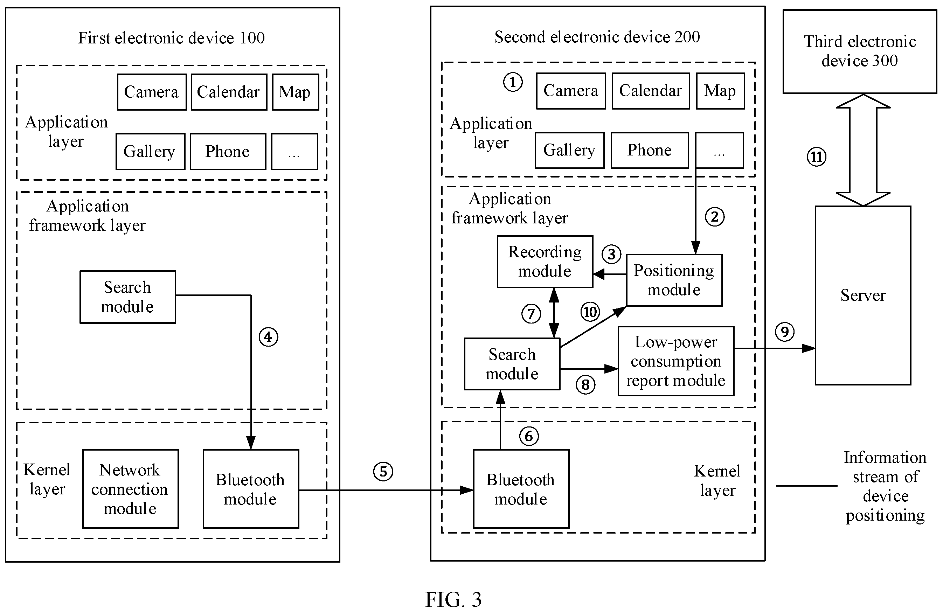

Refer to FIG. 3. FIG. 3 is a block diagram of a software structure of an electronic device according to an embodiment of this application.

As shown in FIG. 3, the layered architecture divides software into several layers, and each layer has a clear role and task. Layers communicate with each other through a software interface. In some feasible implementations, the Android system may be divided into four layers: an application layer, an application framework layer, an Android runtime (Android runtime), a system library, and a kernel layer from top to bottom.

The application layer may include a series of application packages.

As shown in FIG. 3, the application package may include an application (application, APP) like Bluetooth, a device management application (an application having a device management function), Navigation, Map, WLAN, Messaging, Gallery, Calendar, and Phone.

The application framework layer provides an application programming interface and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and received, a browsing history and bookmarks, an address book, and the like.

The view system includes visualized controls, such as a control for displaying a text, and a control for displaying a picture. The view system may be used to build an application. A display interface may include one or more views. For example, a display interface including a message notification icon may include a view for displaying the text and a view for displaying the picture.

The telephone manager is configured to provide a communication function for the electronic device, for example, management of a call status (including answering, declining, or the like)

The resource manager provides various resources for the application, such as a localized string, an icon, a picture, a layout file, and a video file.

The notification manager enables an application to display notification information in a status bar, and may be configured to convey a notification type message. The displayed notification information may automatically disappear after a short pause and require no user interaction. For example, the notification manager is configured to notify download completion, give a message notification, and the like. The notification manager may alternatively be a notification that appears in a top status bar of the system in a form of a graph or a scroll bar text, for example, a notification of an application running on the background, or may be a notification that appears on the display in a form of a dialog interface. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: one is a function that the java language needs to call, and the other is the Android kernel library.

The application layer and the application framework layer run in the virtual machine. The virtual machine executes java files of the application layer and the application framework layer as binary files. The virtual machine is used to perform functions such as object life cycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem, and provides a fusion of 2D and 3D layers for a plurality of applications.

The media library supports a plurality of common audio and video formats, playback and recording, as well as a static image file. The media library may support a plurality of audio and video encoding formats, for example, MPEG 4, H.264, MP3, AAC, AMR, JPG, PNG, and the like.

The three-dimensional graphics processing library is configured to implement three-dimensional graphics drawing, image rendering, composition, layer processing, and the like.

The 2D graphics engine is a drawing engine for 2D drawing.

A kernel layer is a layer between hardware and software. The kernel layer includes at least a display driver, a camera driver, an audio driver, a sensor driver and the like.

The device search method in embodiments of this application may be applied to a positioning scenario of one or more electronic devices. For ease of description, the following uses only an example in which an electronic device locates another electronic device for description. It may be understood that the positioning scenario may be used to locate at least one first electronic device, and a second electronic device may simultaneously locate a plurality of other electronic devices.

FIG. 4a-1 and FIG. 4a-2 are a schematic flowchart of a device search method according to an embodiment of this application. Refer to FIG. 4a-1 and FIG. 4a-2. The method may include the following steps.

In a stage 1, a second electronic device obtains a plurality of pieces of location information in advance.

When a user uses a first application on the second electronic device, the second electronic device may enable "Location information access permission" for the first application. Specifically, for example, the first application is a camera. As shown in FIG. 5a to FIG. 5d, the user operates a setting icon on a display interface of the second electronic device, and the interface of the second electronic device jumps from an interface shown in FIG. 5a to an interface shown in FIG. 5b, for example, a camera setting interface 201. The user may select a "Permission" function on the camera setting interface 201 of the second electronic device, and the interface of the second electronic device jumps from the camera setting interface 201 shown in FIG. 5b to an interface shown in FIG. 5c, for example, a location information permission interface 202. The user selects an "Always allowed" or "Allowed only while in use" function on the location information permission interface 202.

After completing the foregoing work, the user performs an operation on the first application of the second electronic device, and the second electronic device starts the first application in response to the operation performed by the user on the first application. When the first application runs, the second electronic device obtains at least one piece of location information obtained by the first application. The foregoing example is still used. The user operates the camera, and the second electronic device performs ① ③ ③ shown in FIG. 3. Details are as follows: When the user selects the "Allowed only while in use" function on the location information permission interface 202, ① the user operates a camera on an interface shown in FIG. 5d, and the camera starts to run. In this case, (2) the camera invokes a positioning module at an application framework layer to obtain location information of the second electronic device. (3) After the positioning module obtains the location information of the second electronic device, a recording module at the application framework layer records the location information obtained by the positioning module. In this case, the recording module of the second electronic device records the location information and stores the location information in a database.

Certainly, the first application may alternatively be one or more of an online shopping application, a take-out application, a taxi application, a weather forecast application, an advertising application, any application that can obtain a current location of a terminal, or the like. When the user starts these applications, the second electronic device performs the operations described above, to obtain the location information of the second electronic device during use of the application.

The positioning module may include a global positioning system (Global Positioning System, GPS) module, a network positioning module, a fused positioning module, or the like. The location information may include positioning time, positioning longitude and latitude, positioning accuracy, a positioning manner, and the like shown in Table 1. As shown in Table 1:

**Table 1**

| Number | Positioning time | Positioning longitude and latitude | Positioning accuracy | Positioning manner |
|---|---|---|---|---|
| L1 | 2021.7.1 16:30:00:020 | xxxxxxxxx | xxx | GPS positioning |
| L2 | 2021.7.1 17:35:22:560 | xxxxxxxxx | xxx | Network positioning |
| L3 | 2021.7.1 18:40:00:130 | xxxxxxxxx | xxx | Fused positioning |

In the table, the network positioning may be understood as determining a location through Wi-Fi or a data network. To be specific, a physical address (mac address) of an electronic device is obtained through scanning through Wi-Fi or the data network, and a geographical address of the electronic device may be obtained by comparing the physical address with longitude and latitude on a server. The network positioning includes the following two implementations. A first implementation is Wi-Fi cell positioning, where positioning is performed based on a location of a Wi-Fi router. A second implementation is base station positioning, where a geographical location of an electronic device is determined by measuring a distance from the electronic device (for example, a mobile phone) by a base station.

In the table, the fused positioning may be understood as that a fused positioning technology integrates all current positioning manners, such as the GPS positioning, the base station positioning, the Wi-Fi positioning, the Bluetooth positioning, and sensor positioning.

In some embodiments, when a time difference between broadcast time of a Bluetooth broadcast scanned by the second electronic device and time at which the at least one piece of location information is obtained is greater than a second threshold, as shown in FIG. 3, ⑩ a search module of the second electronic device invokes the positioning module to obtain the location information. For example, a low-power consumption positioning module in the second electronic device invokes a fused positioning module, and obtains the location information through the fused positioning module. Then, ③ the recording module of the second electronic device obtains the location information from the positioning module, records the location information, and stores the location information in a database.

It should be noted herein that the second threshold may be set by a system, or the search module periodically delivers a first threshold from a cloud server to a terminal.

In a stage 2, the second electronic device may be used as a device that assists in reporting locations. The second electronic device selects, from the plurality of pieces of location information obtained in the stage 1, first location information, and reports the first location information to the server, to help the first electronic device locate an approximate range of the first electronic device, so as to quickly find the first electronic device. The details are as follows.

S400: The first electronic device enables a retrieval function of the first electronic device.

In a process in which the user uses the first electronic device, the first electronic device may enable an "Enable offline search" function. Specifically, as shown in FIG. 6a to FIG. 6c, the user operates a setting icon on a display interface of the first electronic device, and the first electronic device displays an interface shown in FIG. 6a, for example, a setting interface. The user may select a "Safety" function on the setting interface of the first electronic device. The interface of the first electronic device jumps from the setting interface shown in FIG. 6a to an interface shown in FIG. 6b, for example, a safety interface. The user selects the "Enable offline search" function on the safety interface, and the interface of the first electronic device jumps from the safety interface shown in FIG. 6b to an interface shown in FIG. 6c, for example, a device search interface. After the user selects an "Enable offline search" option on the device search interface, the first electronic device enables the "Enable offline search" function, and can provide safety protection, like positioning and ringing, locking and tracking, and data protection. An example in which the first electronic device is a mobile phone is used. If the mobile phone determines that a current state is an offline state, the mobile phone performs an offline search function. The offline search function includes: If the mobile phone is offline, the mobile phone may attempt to send an offline search request to another mobile phone by sending a Bluetooth signal, so that the another mobile phone reports location information to a server for search.

In some implementations, the device search interface shown in FIG. 6c may further include functions such as "Find my mobile phone", "Send a last location", and "Obtain a location". When the user selects the "Find my mobile phone" function, the user may perform a function of searching for the mobile phone. Specifically, the step of searching for a mobile phone of a lost device in the following embodiment may be performed. When the user selects the "Send a last location" function, the first electronic device sends, to the server, last location information that is obtained before the first electronic device goes offline, or when a battery level of the lost device is lower than a preset value, the first electronic device sends current location information to the server, where the location information may be obtained by using a GPS module. When the user selects the "Obtain a location" function, the first electronic device obtains location information through GPS when the first electronic device is online, and sends the location information to the server.

S401: The first electronic device determines that the first electronic device is in an offline state.

Specifically, the offline state refers to a case in which a Wi-Fi network or a cellular network of the first electronic device is not set to be enabled, so that the first electronic device cannot log in to the Internet.

In some embodiments, the first electronic device may be in an environment with a poor network signal. In this case, the first electronic device may be intermittently connected to a network. Therefore, in some cases, the first electronic device is set with preset time. If offline time of the first electronic device exceeds the preset time, the first electronic device determines that a current state is the offline state. If offline time of the first electronic device does not exceed the preset time, the first electronic device determines that a current state is a non-offline state. In some embodiments, when the first electronic device detects that the user actively closes a connection between the mobile phone and the network, the first electronic device determines that the current state is the offline state, and triggers the following step of lost device retrieval.

In some embodiments, the search module is disposed in the first electronic device, and is configured to determine whether a search function of the first electronic device is enabled. The first electronic device reports a location of the electronic device to the server in real time when the search function of the first electronic device is enabled. In addition, the first electronic device detects a network status of the first electronic device, and if the first electronic device is in the offline state, the first electronic device performs an offline search function of the first electronic device.

S402: The first electronic device sends a Bluetooth broadcast. Correspondingly, the second electronic device receives the Bluetooth broadcast sent by the first electronic device.

In some embodiments, as shown in FIG. 3, ④ the search module of the first electronic device sends an offline search request to a Bluetooth module, where the offline search request is used to invoke a Bluetooth interface to trigger the Bluetooth module to send the Bluetooth broadcast.

In some embodiments, when determining that the current state is the offline state, the first electronic device may directly invoke the interface of the Bluetooth module, and further trigger the Bluetooth module to send the Bluetooth broadcast. In some embodiments, when the first electronic device determines that the current state is the offline state, even if the first electronic device does not enable a Bluetooth function, or the user disables a Bluetooth function on an operation interface. In this scenario, the first electronic device is not affected to directly invoke the Bluetooth module, that is, in the offline state, the first electronic device may drive the Bluetooth module to send the Bluetooth broadcast by using an instruction in the system.

In some embodiments, the Bluetooth broadcast carries an identifier of the first electronic device, and the identifier is used by the server to identify an identity of the first electronic device. Specifically, when the first electronic device logs in to the server, an account of the first electronic device and the identifier of the first electronic device are sent to the server. The server stores the account and the identifier of the first electronic device. When the identifier of the first electronic device is subsequently received, the identifier may match a corresponding account.

In some embodiments, the Bluetooth broadcast carries a public key P of the first electronic device. In some implementations, the first electronic device updates public key information at intervals of a period of time (for example, one day). In this case, the first electronic device may send, to a server end in advance, the public key information that is to be subsequently updated (for example, in a subsequent 14 days). Specifically, the electronic device uploads the public key to the server via another device only on the second day after the loss. In this case, because the server prestores public key information within 14 days after the loss, corresponding device information may be obtained by matching based on the prestored public key information.

In this implementation, the Bluetooth broadcast does not directly transmit the public key information of the first electronic device. In this way, another device that receives the Bluetooth broadcast cannot learn of specific information of the first electronic device, and this can improve security of the first electronic device. In addition, the public key is periodically updated. In this way, a problem that the public key information is traced and cracked can be avoided, information transmission security is improved, and user privacy of a lost device is protected.

In some embodiments, a packet of the Bluetooth broadcast carries a lost identifier, for example, a flag bit in the Bluetooth packet is identified as a "lost device". In this way, when receiving the Bluetooth broadcast, a receiving electronic device may trigger a subsequent step of further confirmation to the server.

In some embodiments, the packet of the Bluetooth broadcast carries an event code. For example, an event code 01 indicates that the electronic device may trigger a subsequent step of further confirmation to the server when receiving the Bluetooth broadcast. An event code 02 indicates that the electronic device may trigger a subsequent step of reporting a location to the server when receiving the Bluetooth broadcast. After receiving the packet, the second electronic device may identify an event corresponding to the event code, and execute the corresponding event based on the event code.

In some embodiments, as shown in FIG. 3, ⑤ a Bluetooth module of a first electronic device 100 sends the Bluetooth broadcast to a Bluetooth module of a second electronic device 200. Correspondingly, the second electronic device 200 receives, through the Bluetooth module, the Bluetooth broadcast sent by the first electronic device.

In some embodiments, the second electronic device may be any device around the loss device, and the second electronic device may perform Bluetooth communication with the first electronic device. The user may enable the Bluetooth function in settings of the second electronic device. After the Bluetooth function is enabled, the second electronic device may monitor a broadcast sent by the first electronic device, and assist the first electronic device in positioning.

In some implementations, when sending the Bluetooth broadcast, the Bluetooth module of the first electronic device 100 performs Bluetooth broadcast at a preset transmit frequency. For example, the Bluetooth broadcast is sent once every preset T time, and duration of sending the Bluetooth broadcast is X seconds. In the X seconds, Bluetooth broadcast information is continuously sent. Correspondingly, when performing signal scanning, the Bluetooth module of the second electronic device 200 performs scanning at a preset scanning frequency. The second electronic device is preset to perform scanning once every y seconds, and duration of each scanning is z seconds.

As long as the first electronic device initiates a broadcast, the second electronic device may receive the broadcast. For example, the second electronic device may perform scanning once every 600 ms, and each scanning duration is 100 ms.

S403: When the second electronic device scans the Bluetooth broadcast, the second electronic device records broadcast information corresponding to the Bluetooth broadcast.

As shown in FIG. 3, ⑥ after the second electronic device scans the Bluetooth broadcast (for example, a BLE broadcast) sent by the first electronic device, the second electronic device records the Bluetooth broadcast and stores the Bluetooth broadcast in a form of broadcast information in a database.

The broadcast information may include broadcast time (or referred to as scanning time), a BLE broadcast packet, a MAC address, a signal strength RSSI, and the like shown in Table 2.

As shown in Table 2:

**Table 2**

| Number | Broadcast time | MAC address | Signal strength RSSI | Broadcast packet |
|---|---|---|---|---|
| B1 | 2021.7.1 16:31:10:121 | 0xxxxxxxxx | -52 | 0xxxxxxxxx |
| B2 | 2021.7.1 16:34:22:560 | 0xxxxxxxxx | -27 | 0xxxxxxxxx |
| B3 | 2021.7.1 17:40:00:230 | 0xxxxxxxxx | -34 | 0xxxxxxxxx |

S404: The second electronic device obtains first location information based on the Bluetooth broadcast.

As shown in FIG. 3, after the second electronic device 200 scans the Bluetooth broadcast, ⑦ a search module in the second electronic device 200 searches the recording module for at least one piece of location information obtained by the second electronic device 200 based on the broadcast time of the Bluetooth broadcast, and obtains extract time of the at least one piece of location information. The search module obtains the first location information based on the broadcast time, where the first location information is at least one of the at least one piece of location information.

In some examples, S404 may be specifically implemented as follows.

S4041: The second electronic device obtains the broadcast time and the time at which the at least one piece of location information is obtained based on the Bluetooth broadcast.

When the second electronic device obtains the Bluetooth broadcast through scanning, the second electronic device obtains the broadcast time of the Bluetooth broadcast, and obtains the extract time of the at least one piece of location information stored in the database.

S4042: The second electronic device obtains the first location information based on the broadcast time and the time at which the at least one piece of location information is obtained.

It should be understood that, the second electronic device compares the broadcast time with the time at which the at least one piece of location information is obtained. The second electronic device uses at least one piece of location information that meets a condition as the first location information.

The condition may include one of the following items: a time difference between the broadcast time and the time at which the location information is obtained is the smallest; a time difference between the broadcast time and the time at which the location information is obtained is less than a first threshold; or a time difference between the broadcast time and the time at which the location information is obtained is the smallest, and the smallest time difference is less than a first threshold.

In a specific implementation, the second electronic device determines that the time difference between the time at which the at least one piece of location information is obtained and the broadcast time is the smallest. The second electronic device uses at least one piece of location information corresponding to the smallest time difference as the first location information.

For example, in the examples in Table 1 and Table 2, the second electronic device stores one piece of location information, and positioning time of the location information L1 is: 2021.7.1 16:30:00:020. When the second electronic device obtains a first Bluetooth broadcast B1 through scanning, broadcast time of the first Bluetooth broadcast is 2021.7.1 16:31:10:121, and a time difference between L1 and B1 calculated by the second electronic device is 1 minute 10 seconds 101 milliseconds. When the second electronic device obtains a second Bluetooth broadcast B2 through scanning, broadcast time of the second Bluetooth broadcast is 2021.7.1 16:34:22:560, and a time difference between L1 and B2 calculated by the second electronic device is 4 minutes 22 seconds 540 milliseconds. It can be learned that positioning reliability of using L1 for B1 is high, and positioning reliability of using L1 for B2 is low.

In the examples in Table 1 and Table 2, the second electronic device stores a plurality of pieces of location information, and the second electronic device further stores location information L2. Positioning time of the location information L2 is: 2021.7.1 16:35:22:560. When the second electronic device obtains a first Bluetooth broadcast B1 through scanning, broadcast time of the first Bluetooth broadcast is 2021.7.1 16:31:10:121, and a time difference between L2 and B1 calculated by the second electronic device is 4 minutes 12 seconds 330 milliseconds. When the second electronic device obtains a second Bluetooth broadcast B2 through scanning, broadcast time of the second Bluetooth broadcast is 2021.7.1 16:34:22:560, and a time difference between L2 and B2 calculated by the second electronic device is 1 minute. When the second electronic device obtains a third Bluetooth broadcast B3 through scanning, broadcast time of the third Bluetooth broadcast is 2021.7.1 16:40:00:230, and a time difference between L2 and B3 calculated by the second electronic device is 4 minutes 37 seconds 670 milliseconds. Therefore, positioning reliability of using L2 for B2 is high, positioning reliability of using L2 for B1 is medium, and positioning reliability of using L2 for B3 is low.

It can be learned that L1 is used to locate B1, and L2 is used to locate B2. When the second electronic device receives the broadcast B1 sent by the first electronic device, the second electronic device determines L1 as the location information of the second electronic device. When the second electronic device receives the broadcast B2 sent by the first electronic device, the second electronic device determines L2 as the location information of the second electronic device.

In another specific implementation, to select the first location information more accurately, the smallest time difference is less than the first threshold. In other words, when the second electronic device determines that the time difference between the broadcast time and the time at which the at least one piece of location information is obtained is the smallest and is less than the first threshold, the second electronic device uses the at least one piece of location information corresponding to the smallest time difference as the first location information. The first threshold may be set by a system, or the search module periodically delivers the first threshold to a terminal by a cloud server. For example, the first threshold may be 5 minutes or 4 minutes. This is not specifically limited in this embodiment of this application. During specific implementation, the first threshold needs to be determined based on an actual situation.

In another specific implementation, the second electronic device determines that the time difference between the time at which the at least one piece of location information is obtained and the broadcast time is less than the first threshold. The second electronic device uses at least one piece of corresponding location information that is less than the first threshold as the first location information.

For example, it is assumed that the first threshold is 5 minutes. In the examples in Table 1 and Table 2, the second electronic device stores a plurality of pieces of location information. For example, the second electronic device stores the location information L1 and the location information L2. The second electronic device calculates that the time difference between L1 and B1 is 1 minute 10 seconds 101 milliseconds, the time difference between L1 and B2 is 4 minutes 22 seconds 540 milliseconds, the time difference between L2 and B1 is 4 minutes 12 seconds 330 milliseconds, the time difference between L2 and B2 is 1 minute, and the time difference between L2 and B3 is 4 minutes 37 seconds 670 milliseconds. These time differences are all less than 5 minutes. Therefore, when the second electronic device receives the broadcast B1 sent by the first electronic device, the second electronic device determines L1 and L2 as the location information of the second electronic device. When the second electronic device receives the broadcast B2 sent by the first electronic device, the second electronic device determines L1 and L2 as the location information of the second electronic device. When the second electronic device receives the broadcast B3 sent by the first electronic device, the second electronic device determines L2 as the location information of the second electronic device.

Therefore, in this embodiment of this application, the second electronic device may use location information obtained by another application on the second electronic device, instead, when the second electronic device scans the Bluetooth broadcast, the second electronic device does not need to frequently invoke location information obtained by using a second application. In this way, power consumption can be effectively reduced, and an effect of reporting the location information for a plurality of times can be implemented, so that efficiency of searching for a lost device is high.

Certainly, if the time difference between the broadcast time and the time at which the at least one piece of location information is obtained does not meet the foregoing condition, the second electronic device obtains the location information in real time, and uses the location information obtained in real time as the first location information. For example, as shown in FIG. 3, ⑩ the search module of the second electronic device invokes the positioning module to obtain the location information in real time, for example, a low-power consumption positioning module in the second electronic device invokes the fused positioning module, and obtains the location information by using the fused positioning module. Then, ③ the recording module of the second electronic device 200 obtains the location information from the positioning module, records the location information and stores the location information in a database. ⑦ The search module of the second electronic device 200 searches the recording module, based on the broadcast time of the Bluetooth broadcast, for the location information obtained by the second electronic device 200, and uses the location information as the first location information.

In some embodiments, as shown in FIG. 4b, after S404 is performed, the device search method provided in this embodiment of this application may further include the following steps.

S410: The second electronic device detects whether the second electronic device is connected to a network. If the second electronic device detects that the second electronic device is connected to the network, S405 is performed. If the second electronic device does not detect that the second electronic device is connected to the network, S411 is performed.

In an embodiment, that the second electronic device is connected to a network may be understood as that the second electronic device is connected to the network by using a fourth application. In other words, to use the fourth application on the second electronic device, the user triggers the second electronic device to start a network connection operation, so that the second electronic device is connected to the network.

The fourth application may be understood as any application on the second electronic device, for example, a take-out application, a taxi application, a travel application, a news application, or an entertainment application. The fourth application is not specifically limited in this embodiment of this application.

In some embodiments, when the second electronic device detects that a third application reports data to the server, the second electronic device reports the first location information to the server. In other words, when the second electronic device detects that one of the plurality of applications on the second electronic device interacts with the server, the second electronic device reports the first location information to the server. In a specific implementation, the server and a server of the third application in this embodiment of this application are a same server. In this way, the second electronic device does not need to deliberately start the network to report the location information, so that power consumption of separately starting the network can be reduced, and power consumption of waking up the AP can be reduced.

S411: The second electronic device does not report the second location information to the server.

In this embodiment of this application, the second electronic device detects whether the second electronic device enables network connection by using the fourth application. If the second electronic device detects that the second electronic device enables network connection by using the fourth application, the second electronic device reports the first location information to the server. In this way, the second electronic device does not need to deliberately start the network to report the location information, to reduce power consumption of waking up the AP and starting the network.

S405: The second electronic device reports the first location information and device information of the first electronic device to the server.

As shown in FIG. 3, ⑧ the search module in the second electronic device 200 sends the found first location information and device information of the first electronic device to a low-power consumption reporting module. ⑨ The low-power consumption reporting module reports the first location information and the device information of the first electronic device to the server.

There may be one or more pieces of first location information. This is not specifically limited in this embodiment of this application.

Specifically, the device information of the first electronic device may include an identifier of the first electronic device or public key information of the first electronic device. The identifier of the first electronic device or the public key information of the first electronic device may be obtained from the Bluetooth broadcast sent by the first electronic device. The device information of the first electronic device indicates the server to match the location information of the second electronic device with the account of the first electronic device based on the device information of the first electronic device.

In some embodiments, when the first electronic device may perform Bluetooth short-range communication with the second electronic device, a physical distance between the two devices falls within a specific range, for example, a range of about 10 meters, and a location of the second electronic device is reported to the server as a nearby location of the first electronic device for reference by the user. Specifically, the second electronic device encrypts the first location information and reports the encrypted first location information to the server. In the foregoing example, the second electronic device encrypts positioning longitude and latitude of L1 and the positioning accuracy, and then reports the encrypted positioning longitude and latitude of L1 and the positioning accuracy to the server. For example, the Bluetooth broadcast sent by the first electronic device carries a derived public key Pi of the public key P. The second electronic device encrypts the first location information by using an elliptic curve integrated encryption scheme (elliptic curve integrated encryption scheme, ECIES) algorithm, to obtain a ciphertext of the first location information, where the ciphertext of the first location information carries a hash ciphertext of the public key Pi.

In some embodiments, the second electronic device reports the location information to the server based on the offline positioning request sent by the first electronic device in S405. Certainly, the second electronic device may alternatively (as described in the following, the second electronic device detects that another application reports data to the server) determine whether to report the location information to the server based on a situation of the second electronic device. Alternatively, the second electronic device may report the location information when receiving a reporting instruction sent by the server. For example, when the third electronic device requests the server to query the location information of the first electronic device, the server sends an instruction for reporting the location information to the second electronic device. In this case, the second electronic device may report the location information to the server.

In some embodiments, when the second electronic device receives the broadcast sent by the first electronic device, the second electronic device determines a plurality of pieces of location information, and the second electronic device reports the location information to the server in batches. For example, as shown in the foregoing example, when the second electronic device receives the broadcast B1 sent by the first electronic device, the second electronic device determines L1 and L2 as the location information of the second electronic device. The second electronic device may report the location information L1 and the location information L2 together to the server.

In some embodiments, when the second electronic device receives the broadcast sent by the first electronic device, regardless of whether the second electronic device determines one or more pieces of location information, the second electronic device may report location information of a period of time to the server in batches. For example, in the foregoing example, the second electronic device determines the location information L1 of 2021.7.1 16:31:10:121 and the location information L2 of 2021.7.1 16:34:22:560. The second electronic device may report the location information L1 and the location information L2 together to the server.

In this embodiment of this application, compared with that the second electronic device reports the location information to the server once when determining a piece of location information, the second electronic device reports the location information to the server in batches, to reduce power consumption more effectively.

S406: The server updates the location information of the first electronic device based on update information.

The server matches the location information of the second electronic device with the account of the first electronic device based on the device information of the first electronic device. Specifically, the server may determine the account of the first electronic device based on the identifier of the first electronic device or the public key information of the first electronic device that is included in the device information of the first electronic device. The updating the location information of the first electronic device includes: recording the location information of the second electronic device as location information of the first electronic device. In this way, an association relationship is established between the location of the second electronic device, the first electronic device and the account of the first electronic device.

In some embodiments, there may be a plurality of second electronic devices around the first electronic device. In this case, the updating the location information of the first electronic device specifically includes: The server may match location information of the plurality of second electronic devices with the account of the first electronic device, and record the location information of the plurality of second electronic devices as the location information around the first electronic device.

S407: The third electronic device sends a query request to the server, where the query request is used to request to query the location information of the first electronic device.

As shown in FIG. 3, ⑪ the third electronic device 300 sends the query request to the server.

In some embodiments, the query request carries the device information of the first electronic device. Specifically, the device information includes the identifier of the first electronic device or the derived public key Pi of the public key P of the first electronic device. In some embodiments, the information carried in a first instruction may further include a power level, a function parameter (like a positioning function) of the second electronic device 200, and the like.

Specifically, the user logs in to an official website of a mobile phone manufacturer by using the third electronic device, or sends the query request by using the third application of the third electronic device. In some embodiments, the query request carries account information of the user.

Example 1: The user may operate the third application on the third electronic device, and send the query request to the server by using the third application. As shown in FIG. 7a, the user may tap a "Find my device" icon of the third electronic device, and an interface of the third electronic device jumps from the interface shown in FIG. 7a to an interface shown in FIG. 7b. After the user enters the account and the password on the interface, the user taps a login control, and the third electronic device sends the query request to the server, where the query request carries the account and the derived public key Pi of the public key P of the first electronic device.

Example 2: The user may log in to an official website of a mobile phone manufacturer by using the third electronic device. As shown in FIG. 8a, the user accesses the official website. The user taps a "Find a device" control shown in FIG. 8a, and the interface of the third electronic device jumps to an interface shown in FIG. 8b. After the user inputs the account and the password on the interface, the user taps the login control, and logs in on a web page end. The third electronic device may send a query request to the server, and enable a device search function.

Certainly, the third electronic device may send the query request to the server before S401. This is not specifically limited in this embodiment of this application.

S408: The server sends the first location information to the third electronic device based on the query request.

As shown in FIG. 3, ⑪ the server sends the first location information to the third electronic device 300 based on the query request.

The user logs in to the account of the first electronic device on the third electronic device. The server sends, based on the account that is of the first electronic device and that matches the location information of the second electronic device, the location information of the second electronic device to a device to which the account of the first electronic device logs in. In other words, the server sends the location information of the first electronic device to the third electronic device, that is, the server sends the first location information to the third electronic device.

Specifically, the server sends the first location information of the second electronic device to the third electronic device, and the third electronic device decrypts the location information by using a private key di derived from a private key d.

The third electronic device receives the ciphertext of the first location information, and decrypts the ciphertext of the first location information based on di derived from the private key d held by the third electronic device, to obtain the location of the second electronic device.

S409: The third electronic device displays a first interface, where the first interface includes a first location corresponding to the first location information.

In some embodiments, the third electronic device displays the first interface on a search module of the third electronic device based on the obtained location information. The first interface may include at least one second electronic device. The first interface may further display a distance scale. In this way, the user may intuitively view, by viewing the first interface, a location of the first electronic device around the second electronic device, so that the user determines an approximate range of the first electronic device based on the location of the second electronic device, so that the user can find a lost device more quickly and accurately, and a retrieval rate of the lost device is improved.

As shown in FIG. 7c, the server sends the first location information of the second electronic device to the third electronic device, and an interface on the third electronic device jumps from the interface shown in FIG. 7b to an interface shown in FIG. 7c. An approximate area of the first electronic device, offline time of the first electronic device, a function control, and the like are displayed on the interface. The function controls may include controls such as a positioning device, a preset ringtone, a lost mode, and data deletion.

As shown in FIG. 7d, the server sends the first location information of the second electronic device to the third electronic device, and another display interface of the third electronic device is an interface shown in FIG. 7d. On a function option of "Offline search" on the interface, "My device huawei P40", offline time "2021-6-30 12:22", and location success time "2021-7-1 16:31:10", a specific location, and the like are displayed. The interface shown in FIG. 7d may further include function options such as "Lock a device", "SMS notification", "Delete data", and "Preset ringtone". The "Lock device" function option may lock the first electronic device, so that another person cannot operate the first electronic device. The "SMS notification" function option may send an SMS message to the first electronic device. The "Delete data" function option may delete data stored on the first electronic device, to prevent information leakage. The "Preset ringtone" function option may set an alarm ringtone for the first electronic device, so as to remind a peripheral user that the first electronic device is a lost device. When the user operates the foregoing function control on the interface shown in FIG. 7d, the third electronic device sends a corresponding request to the server, and the server performs an operation based on the request.

In another application scenario, the user may log in to an official website of a mobile phone manufacturer by using the third electronic device. As shown in FIG. 8a, the user accesses the official website. The user taps a "Find a device" control shown in FIG. 8a, and the interface of the third electronic device jumps to an interface shown in FIG. 8b. When the user operates the login control on the interface shown in FIG. 8b, the server sends location information with highest reliability to the third electronic device. For example, that the third electronic device is a laptop computer is used as an example, and the third electronic device displays an interface shown in FIG. 7e. A plurality of pieces of location information of the first electronic device are displayed on the interface, for example, location information such as "2021.7.1 16:31:10 LI" and "2021.7.1 16:34:22 L2" shown in FIG. 7e.

In another application scenario, the first electronic device may be a locator or a tracker, the second electronic device may be a mobile phone, and the third electronic device may be a mobile phone or a computer. The first electronic device may be hung on an object (like a backpack) of the user. The first electronic device is paired with the second electronic device through Bluetooth, and the first electronic device may be paired with the third electronic device through a key. The first electronic device sends a Bluetooth broadcast to the second electronic device. When the second electronic device scans the Bluetooth broadcast sent by the first electronic device, the second electronic device searches prestored location information for first location information that matches the Bluetooth broadcast. The second device reports the first location information to the server. When the user searches for the first electronic device by using the third electronic device, the third electronic device sends a query request to the server, and the server searches for the first location information of the second electronic device based on the query request, and sends the first location information of the second electronic device to the third electronic device. The third electronic device displays the location of the second electronic device, so that the user determines an approximate range of the first electronic device based on the location of the second electronic device, so that the user can find the object of the user more quickly and accurately, and search efficiency is improved.

The implementations of this application may be randomly combined to achieve different technical effects.

An embodiment of this application further provides an electronic device, including one or more processors and one or more memories. The one or more memories are coupled to the one or more processors. The one or more memories are configured to store computer program code. The computer program code includes a computer instruction. When the one or more processors execute the computer instruction, an electronic device is enabled to perform the foregoing related method steps to implement the method in the foregoing embodiments.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs any one of the foregoing methods performed by the electronic device in the foregoing method embodiments.

An embodiment of this application further provides a chip. The chip includes a processor and an interface circuit. The interface circuit is coupled to the processor. The processor is configured to run a computer program or instructions to implement the foregoing method. The interface circuit is configured to communicate with another module other than the chip.

In the description of this application, unless otherwise specified, "/" means "or", for example, A/B may represent A or B. The term "and/or" in this specification is merely an association relationship for describing associated objects, and indicates that three relationships may exist. For example, A and/or B may represent the following three cases: Only A exists, both A and B exist, and only B exists. In addition, "at least one" means one or more, and "a plurality of' means two or more. Words such as "first" and "second" do not limit a quantity and an execution order, and words such as "first" and "second" do not necessarily limit a difference.

In the description of this application, the word "example", "for example", or the like is used to represent giving an example, an illustration, or a description. Any embodiment or design scheme described as "an example" or "for example" in embodiments of this application should not be construed as being more preferable or advantageous than other embodiments or design schemes. Exactly, use of the term "an example", "for example", or the like is intended to present a related concept in a specific manner.

Based on descriptions about the foregoing implementations, a person skilled in the art may clearly understand that, for a purpose of convenient and brief description, division into the foregoing function modules is used as an example for illustration. In actual application, the foregoing functions may be allocated to different function modules and implemented according to a requirement. In other words, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A device search method, comprising:
obtaining, by a first application of a second electronic device, at least one piece of location information;
after the first application of the second electronic device obtains the at least one piece of location information, sending, by a first electronic device, a first Bluetooth broadcast to the second electronic device, wherein the first electronic device is in an offline state;
scanning, by the second electronic device, the first Bluetooth broadcast sent by the first electronic device;
obtaining, by the second electronic device, first location information based on the first Bluetooth broadcast, wherein the first location information is at least one of the at least one piece of location information; and
reporting, by the second electronic device, the first location information to a server.

2. The method according to claim 1, wherein the reporting, by the second electronic device, the first location information to a server comprises:
reporting, by the second electronic device, the first location information and device information of the first electronic device to the server, wherein
the device information of the first electronic device indicates the server to match location information of the second electronic device with an account of the first electronic device based on the device information of the first electronic device.

3. The method according to claim 1 or 2, wherein after the reporting, by the second electronic device, the first location information to a server, the method further comprises:
sending, by a third electronic device, a query request to the server, wherein the query request is used to request to query a location of the first electronic device;
obtaining, by the server, the first location information based on the query request;
sending, by the server, the first location information to the third electronic device; and
displaying, by the third electronic device, a first interface, wherein the first interface comprises a first location corresponding to the first location information.

4. The method according to any one of claims 1 to 3, wherein the obtaining, by the second electronic device, first location information based on the first Bluetooth broadcast comprises:
obtaining, by the second electronic device based on the first Bluetooth broadcast, broadcast time and time at which the at least one piece of location information is obtained; and
obtaining, by the second electronic device, the first location information based on the broadcast time and the time at which the at least one piece of location information is obtained.

5. The method according to claim 4, wherein the obtaining, by the second electronic device, the first location information based on the broadcast time and the time at which the at least one piece of location information is obtained comprises:
determining, by the second electronic device, that a time difference between the time at which the at least one piece of location information is obtained and the broadcast time is less than a first threshold; and
using, by the second electronic device, at least one piece of corresponding location information that is less than the first threshold as the first location information.

6. The method according to claim 4, wherein the obtaining, by the second electronic device, the first location information based on the broadcast time and the time at which the at least one piece of location information is obtained comprises:
determining, by the second electronic device, that a time difference between the time at which the at least one piece of location information is obtained and the broadcast time is the smallest; and
using, by the second electronic device, at least one piece of location information corresponding to the smallest time difference as the first location information.

7. The method according to claim 6, wherein the determining, by the second electronic device, that a time difference between the time at which the at least one piece of location information is obtained and the broadcast time is the smallest comprises:
determining, by the second electronic device, that the time difference between the time at which the at least one piece of location information is obtained and the broadcast time is the smallest and the time difference is less than a second threshold.

8. The method according to any one of claims 1 to 7, further comprising:
invoking, by the second electronic device, a second application to obtain the location information when a time difference between broadcast time of a second Bluetooth broadcast scanned by the second electronic device and the time at which the at least one piece of location information is obtained is greater than a third threshold.

9. The method according to claim 8, wherein the second application is any application that can obtain the location information and that is in the second electronic device.

10. The method according to any one of claims 1 to 9, wherein the reporting, by the second electronic device, the first location information to a server comprises:
when the second electronic device detects that a third application reports data to the server, reporting, by the second electronic device, the first location information to the server.

11. The method according to any one of claims 1 to 9, wherein the reporting, by the second electronic device, the first location information to a server comprises:
when the second electronic device is connected to a network, reporting, by the second electronic device, the first location information to the server, wherein the second electronic device enables a network connection by using a fourth application.

12. The method according to any one of claims 1 to 11, wherein the reporting, by the second electronic device, the first location information to a server comprises:
simultaneously reporting, by the second electronic device, a plurality of pieces of first location information to the server.

13. The method according to any one of claims 1 to 12, wherein before the obtaining, by a first application of a second electronic device, at least one piece of location information, the method further comprises:
receiving, by the second electronic device, an operation performed by a user on the first application, wherein a location obtaining function of the first application is enabled in advance; and
starting, by the second electronic device, the first application in response to the operation performed by the user on the first application.

14. The method according to any one of claims 1 to 13, wherein there is at least one second electronic device.

15. The method according to any one of claims 3 to 14, further comprising:
pairing, by the first electronic device, with the third electronic device in advance, to generate a pair of a public key and a private key that are on an elliptic curve, wherein
holding, by the first electronic device, the public key, and the third electronic device holds the private key and the public key.

16. The method according to any one of claims 3 to 14, further comprising:
generating, by the first electronic device, a pair of a public key and a private key that are on an elliptic curve;
synchronizing, by the first electronic device, the public key and the private key to the third electronic device in a trust environment, wherein the third electronic device and the first electronic device use the same account.

17. A device search method, comprising:
obtaining, by a first application of a second electronic device, at least one piece of location information;
after the first application obtains the at least one piece of location information, scanning, by the second electronic device, a first Bluetooth broadcast sent by a first electronic device, wherein the first electronic device is in an offline state;
obtaining, by the second electronic device, first location information based on the first Bluetooth broadcast, wherein the first location information is at least one of the at least one piece of location information; and
reporting, by the second electronic device, the first location information to a server.

18. The method according to claim 17, wherein the reporting, by the second electronic device, the first location information to a server comprises:
reporting, by the second electronic device, the first location information and device information of the first electronic device to the server, wherein
the device information of the first electronic device indicates the server to match location information of the second electronic device with an account of the first electronic device based on the device information of the first electronic device.

19. The method according to claim 17 or 18, wherein the obtaining, by the second electronic device, first location information based on the first Bluetooth broadcast comprises:
obtaining, by the second electronic device based on the first Bluetooth broadcast, broadcast time and time at which the at least one piece of location information is obtained; and
obtaining, by the second electronic device, the first location information based on the broadcast time and the time at which the at least one piece of location information is obtained.

20. The method according to claim 19, wherein the obtaining, by the second electronic device, the first location information based on the broadcast time and the time at which the at least one piece of location information is obtained comprises:
determining, by the second electronic device, that a time difference between the time at which the at least one piece of location information is obtained and the broadcast time is less than a first threshold; and
using, by the second electronic device, at least one piece of corresponding location information that is less than the first threshold as the first location information.

21. The method according to claim 19, wherein the obtaining, by the second electronic device, the first location information based on the broadcast time and the time at which the at least one piece of location information is obtained comprises:
determining, by the second electronic device, that a time difference between the time at which the at least one piece of location information is obtained and the broadcast time is the smallest; and
using, by the second electronic device, at least one piece of location information corresponding to the smallest time difference as the first location information.

22. The method according to claim 21, wherein the determining, by the second electronic device, that a time difference between the time at which the at least one piece of location information is obtained and the broadcast time is the smallest comprises:
determining, by the second electronic device, that the time difference between the time at which the at least one piece of location information is obtained and the broadcast time is the smallest and the time difference is less than a second threshold.

23. The method according to any one of claims 17 to 22, further comprising:
invoking, by the second electronic device, a second application to obtain the location information when a time difference between broadcast time of a second Bluetooth broadcast scanned by the second electronic device and the time at which the at least one piece of location information is obtained is greater than a third threshold.

24. The method according to claim 23, wherein the second application is any application that can obtain the location information and that is in the second electronic device.

25. The method according to any one of claims 17 to 24, wherein the reporting, by the second electronic device, the first location information to a server comprises:
when the second electronic device detects that a third application reports data to the server, reporting, by the second electronic device, the first location information to the server.

26. The method according to any one of claims 17 to 24, wherein the reporting, by the second electronic device, the first location information to a server comprises:
when the second electronic device is connected to a network, reporting, by the second electronic device, the first location information to the server, wherein the second electronic device enables a network connection by using a fourth application.

27. The method according to any one of claims 17 to 26, wherein the reporting, by the second electronic device, the first location information to a server comprises:
simultaneously reporting, by the second electronic device, a plurality of pieces of first location information to the server.

28. The method according to any one of claims 17 to 27, wherein before the obtaining, by a first application of a second electronic device, at least one piece of location information, the method further comprises:
receiving, by the second electronic device, an operation performed by a user on the first application, wherein a location obtaining function of the first application is enabled in advance; and
starting, by the second electronic device, the first application in response to the operation performed by the user on the first application.

29. The method according to any one of claims 17 to 28, wherein there is at least one second electronic device.

30. A device search system, comprising:
a second electronic device, wherein a first application of the second electronic device obtains at least one piece of location information; and
a first electronic device, configured to: after the first application obtains the at least one piece of location information, send a first Bluetooth broadcast to the second electronic device, wherein the first electronic device is in an offline state, wherein
the second electronic device is configured to scan the first Bluetooth broadcast sent by the first electronic device;
the second electronic device is configured to obtain first location information based on the first Bluetooth broadcast, wherein the first location information is at least one of the at least one piece of location information; and
the second electronic device is configured to report the first location information to a server.

31. The system according to claim 30, wherein the second electronic device is further configured to:
report the first location information and device information of the first electronic device to the server, wherein
the device information of the first electronic device indicates the server to match location information of the second electronic device with an account of the first electronic device based on the device information of the first electronic device.

32. The system according to claim 30 or 31, further comprising:
a third electronic device, configured to send a query request to the server, wherein the query request is used to request to query a location of the first electronic device; and
the server, configured to obtain the first location information based on the query request, wherein
the server is further configured to send the first location information to the third electronic device; and
the third electronic device is further configured to display a first interface, wherein the first interface comprises a first location corresponding to the first location information.

33. The system according to any one of claims 30 to 32, wherein the second electronic device is further configured to:
obtain, based on the first Bluetooth broadcast, broadcast time and time at which the at least one piece of location information is obtained; and
obtain the first location information based on the broadcast time and the time at which the at least one piece of location information is obtained.

34. The system according to claim 33, wherein the second electronic device is further configured to:
determine that a time difference between the time at which the at least one piece of location information is obtained and the broadcast time is less than a first threshold; and
use at least one piece of corresponding location information that is less than the first threshold as the first location information.

35. The system according to claim 33, wherein the second electronic device is further configured to:
determine that a time difference between the time at which the at least one piece of location information is obtained and the broadcast time is the smallest; and
use at least one piece of location information corresponding to the smallest time difference as the first location information.

36. The system according to claim 35, wherein the second electronic device is further configured to:
determine that the time difference between the time at which the at least one piece of location information is obtained and the broadcast time is the smallest and the time difference is less than a second threshold.

37. The system according to any one of claims 30 to 36, wherein the second electronic device is further configured to:
invoke a second application to obtain the location information when a time difference between broadcast time of a scanned second Bluetooth broadcast and the time at which the at least one piece of location information is obtained is greater than a third threshold.

38. The system according to claim 37, wherein the second application is any application that can obtain the location information and that is in the second electronic device.

39. The system according to any one of claims 30 to 38, wherein the second electronic device is further configured to:
when the second electronic device detects that a third application reports data to the server, report the first location information to the server.

40. The system according to any one of claims 30 to 38, wherein the second electronic device is further configured to:
when the second electronic device is connected to a network, report the first location information to the server, wherein the second electronic device enables a network connection by using a fourth application.

41. The system according to any one of claims 30 to 39, wherein the second electronic device is further configured to:
simultaneously report a plurality of pieces of first location information to the server.

42. The system according to any one of claims 30 to 40, wherein the second electronic device is further configured to:
receive an operation performed by a user on the first application, wherein a location obtaining function of the first application is enabled in advance; and
start the first application in response to the operation performed by the user on the first application.

43. The system according to any one of claims 30 to 42, wherein there is at least one second electronic device.

44. The system according to any one of claims 32 to 43, wherein the first electronic device is further configured to:
pair with the third electronic device in advance, to generate a pair of a public key and a private key that are on an elliptic curve, wherein
the first electronic device holds the public key, and the third electronic device holds the private key and the public key.

45. The system according to any one of claims 32 to 43, wherein the first electronic device is further configured to:
generate a pair of a public key and a private key that are on an elliptic curve; and
synchronize the public key and the private key to the third electronic device in a trust environment, wherein the third electronic device and the first electronic device use a same account.

46. An electronic device, wherein the electronic device is used as a first electronic device and comprises a touchscreen, a memory, a transceiver, one or more processors, a plurality of applications, and one or more programs; the one or more programs are stored in the memory; the transceiver is configured to transmit or receive a wireless signal; and when the one or more processors execute the one or more programs, the electronic device is enabled to implement the method according to any one of claims 1 to 16, or the electronic device is enabled to implement the method according to any one of claims 17 to 29.

47. A computer-readable storage medium, wherein the computer-readable storage medium stores a computer program, the computer program comprises program instructions, and when the program instructions are executed by a computer, the computer is enabled to perform the method according to any one of claims 1 to 16 or the method according to any one of claims 17 to 29.

48. A computer program product, wherein when the computer program product runs on a computer, the computer is enabled to perform the method according to any one of claims 1 to 16 or the method according to any one of claims 17 to 29.
